# EUROPEAN PATENT SPECIFICATION

(11) **EP 2 965 977 B1**
(45) Date of publication and mention of the grant of the patent: **17.05.2017**
(21) Application number: 15168868.6
(22) Date of filing: 22.05.2015
(51) Int. Cl.: B62J 37/00, B62K 11/10, B62K 19/06

(54) **SCOOTER TYPE VEHICLE**
ROLLERARTIGES FAHRZEUG
VÉHICULE DE TYPE SCOOTER

(30) Priority: 08.07.2014 JP 2014140489
(43) Date of publication of application: 13.01.2016
(73) Proprietor: Yamaha Hatsudoki Kabushiki Kaisha, Shizuoka-ken Shizuoka 438-8501 (JP)
(72) Inventor: Fujiwara, Yuu, Shizuoka, Shizuoka 4388501 (JP); Kawaguchi, Tsutomu, Shizuoka, Shizuoka 4388501 (JP)
(74) Representative: Moreland, David

(56) References cited:
- EP-A2- 1 275 830
- EP-A2- 2 025 588
- JP-A- 2003 246 287

## Description

### FIELD OF INVENTION

The present invention relates to a scooter type vehicle.

### BACKGROUND OF INVENTION

It is an object of at least one embodiment of at least one aspect of the present invention to obviate or at least mitigate one or more problems or disadvantages in the prior art. A scooter type vehicle including a flat footboard is per se known in the prior art. Among scooter type vehicles, there is a type in which the fuel tank is disposed under a flat footboard. The fuel tank includes a space for storage of fuel, and is fitted under the flat footboard. A fuel supply pipe is connected to the fuel tank. This fuel supply pipe projects from the fuel tank. For example, in the scooter type vehicle described in Japanese Laid-Open Patent Publication 2003-246287 (Yamaha), the fuel supply pipe is disposed on one lateral side of a down frame.

From the standpoint of rider comfort, it is desirable to maximize or have sufficient length of the flat footboard along the longitudinal direction (front and rear direction) of the vehicle. However, the down frame, which extends downwardly from a head pipe, is disposed in front of the flat footboard. Accordingly, the forward extent of the flat footboard is limited by the down frame. Due to this, lengthening the flat footboard in the direction longitudinal to the vehicle is not simple.

Moreover, from the standpoint of simplicity of fuel supply, it is desirable for the fuel supply aperture through which the fuel is supplied to be in a high position. Due to this, it is desirable for the fuel supply pipe to be provided in front of the flat footboard so as to extend upward. However, if the fuel tank is installed under the flat footboard as explained above, then this fuel supply pipe that is disposed in front of the flat footboard can itself constitute a cause of limitation of the position or length of the flat footboard. For example, if the fuel supply pipe is disposed rearward of the down frame, then, when the flat footboard is disposed behind the fuel supply pipe, the dimension of the flat footboard in the longitudinal direction is limited or diminished. Moreover it is extremely difficult to dispose the fuel supply pipe forward the down frame, since the front wheel, which rotates, is disposed in front of the down frame and in front of the fuel supply pipe.

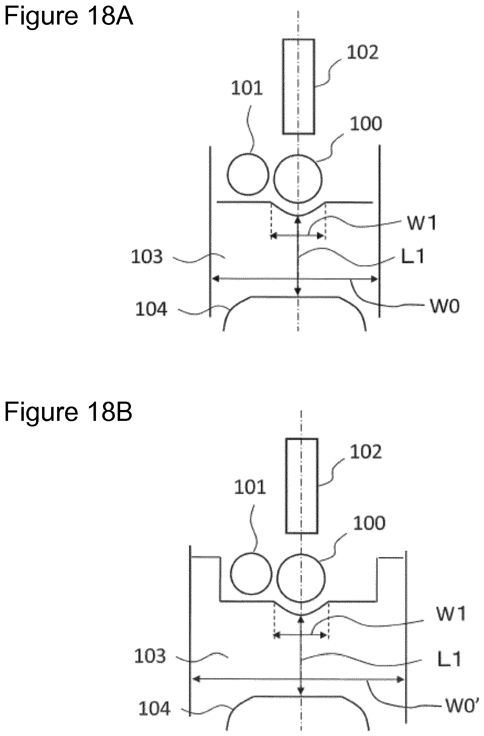

By contrast, with the scooter type vehicle of Japanese Laid-Open Patent Publication 2003-246287, the fuel supply pipe is arranged at the lateral side of the down frame. Due to this, as shown in Figure 18A for example, it is possible to extend the flat footboard 103 up to a position just behind the rear of the down frame 100 and of the fuel supply pipe 101, while still avoiding interference with the front wheel 102. As a result, it may be possible to lengthen the flat footboard 103 in the longitudinal direction (L1) of the vehicle. However, in order to make it possible to enhance the level of comfort of the rider yet further, it is desirable to extend the length of the flat footboard yet further.

It should be understood that if, as shown in Figure 18B, the width of the flat footboard 103 in the transverse direction of the vehicle (left and right direction) is increased, then it is possible to increase the length of the flat footboard 103 in the longitudinal direction of the vehicle (W0 in Figure 18A and W0' in Figure 18B). However, if the width of the flat footboard 103 in the transverse direction of the vehicle is increased, then there may be a possibility that a problem may arise in which the bank angle through which the rider can lean the scooter type vehicle becomes restricted, or the like. Due to this, it is not desirable for the flat footboard to become wide in the transverse direction of the vehicle. Accordingly it may be desirable to increase the length of the flat footboard in the direction longitudinal to the vehicle, while still suppressing increase its width in the transverse direction of the vehicle.

### SUMMARY OF INVENTION

At least one problem which at least one embodiment of the present invention seeks to address is to enhance the comfort of the rider by making it possible to lengthen the flat footboard along the longitudinal direction of a scooter type vehicle in which a fuel tank may be disposed under a flat footboard, while suppressing an increase in the size of the flat footboard in the transverse direction of the vehicle.The present invention is defined in the independent claim appended hereto. Some preferred features are defined in the dependent claims appended hereto.

According to the present invention the scooter type vehicle cpmprises: a head pipe, a down frame extending downward from the head pipe, a lower frame extending rearward from the down frame, a seat frame extending rearward and upward from the lower frame, a seat disposed rearward of the head pipe and supported upon the seat frame, a flat footboard for placing a rider's feet upon, the flat footboard being disposed below and forward the seat, and over the lower frame, a fuel tank disposed under the flat footboard; a fuel supply pipe projecting upward from the fuel tank, and a front wheel disposed in front of a lower end portion of the down frame, in front of the fuel pipe and in front of the fuel tank when viewed from a side of the scooter type vehicle.

Moreover, when viewed from the side of the scooter type vehicle, at least a portion of a lower end portion of the fuel supply pipe overlaps the down frame. When viewed in a plan view of the scooter type vehicle, a center line of the scooter type vehicle extends in the longitudinal direction of the scooter type vehicle through the head pipe.

The flat footboard includes a central portion disposed behind the lower end portion of the down frame and the fuel supply pipe, a left footrest portion disposed forward of the central portion and to the left side of the fuel supply pipe and the lower end portion of the down frame and a right footrest portion disposed forward of the central portion and to the right side of the fuel supply pipe and the lower end portion of the down frame, characterized in that the down frame extends toward a side from the head pipe so that, when viewed in a plan view of the scooter type vehicle, at least a portion of the lower end portion of the down frame is disposed to the side with respect to the center line, and in that, when viewed in a plan view of the scooter type vehicle, at least a portion of the fuel supply pipe is disposed on an other or opposite side of the center line to the side of the center line to which the down frame extends.

For example, in configurations where the down frame extends to the right side then, in a plan view of the vehicle, at least a portion of the fuel supply pipe may be disposed on the left side with respect to the center line. In configurations where the down frame extends to the left side then, as seen in a plan view of the vehicle, at least a portion of the fuel supply pipe may be disposed on the right side with respect to the center line.

As seen in a plan view of the vehicle, the lower end portion of the down frame may be disposed on the right side, or on the left side, with respect to the center line. As seen in a plan view of the vehicle, with respect to the center line of the vehicle, the fuel supply pipe may be disposed on the opposite side to the lower end portion of the down frame. Due to this, as compared to the configuration in which the lower end portion of the down frame is disposed upon the center line of the vehicle, and the fuel supply pipe is disposed at the side thereof, it may be possible to ensure broad spaces on both sides of the lower end portion of the down frame and of the fuel supply pipe while restraining increases in the size of the flat footboard in the transverse direction of the vehicle. The left and right footrest portions of the flat footboard may be disposed respectively on the left and right sides of the lower end portion of the down frame and of the fuel supply pipe. Due to this, it may be possible to increase the length of the flat footboard in the longitudinal direction of the vehicle at the left and right footrest portions while restraining increases in the size of the flat footboard in the transverse direction of the vehicle.

The width of the central portion may become greater than the width of the central portion of a vehicle according to the prior art as described above. In other words, since the central portion of the flat footboard, which may be shorter longitudinally than its left and right footrest portions, may become wider transversely. Accordingly, due to this, there may be a concern that this may engender a deterioration of rider comfort.

However, the inventors of the present invention have become aware that, even if the width of the central portion of the flat footboard is great, the influence that this exerts upon rider comfort may be relatively small, and that lengthening of the left and right footrest portions in the longitudinal direction may contributes much more to the enhancement of rider comfort.

In other words, the central portion of the flat footboard may be mainly used for one leg to pass over when the rider is getting on to the vehicle or getting off from it. Due to this, it may be sufficient that the dimension of this central portion in the longitudinal direction is large enough to allow the leg of the rider to pass. By contrast, during driving, the frequency with which the rider places his feet upon the left and right footrest portions rather than upon the central portion may be high. Accordingly, even if the width of the central portion is great, the influence that this exerts upon the comfort of the rider during driving may be small. As such, it may be possible to enhance the comfort from the point of view of the rider much more by lengthening the longitudinal dimensions of the left and right footrest portions, which may therefore be preferable.

Due to the above, it may be possible to lengthen the dimensions of the left and right footrest portions of the flat footboard in the longitudinal direction of the vehicle, while still restraining increase in the size of the flat footboard in the transverse direction of the vehicle, so that it is thereby possible to enhance the level of comfort for the rider.

Preferably, at least a portion of the left footrest portion and at least a portion of the right footrest portion may be positioned forwardly of the rear end of the lower end portion of the down frame and/or the rear end of the lower end portion of the fuel supply pipe. In this case, by making it possible to elongate the left and right footrest portions in the longitudinal direction of the vehicle, it may be possible to enhance the level of comfort of the rider.

Preferably, at least a portion of the left footrest portion and at least a portion of the right footrest portion may be positioned forwardly of the front edge of the lower end portion of the fuel supply pipe. In this case, the left and the right footrest portions may be extended forward without suffering any limitation from the fuel supply pipe and from the down frame. Accordingly, it may be possible to extend both the left and the right footrest portions forward while suppressing increase in the size of the flat footboard in the transverse direction of the vehicle. Accordingly, it may be possible to enhance the level of comfort for the rider of the vehicle.

Preferably, the center line of the vehicle in the transverse direction of the vehicle may be positioned between an inner edge, in the transverse direction of the vehicle, of the lower end portion of the down frame, and an inner edge, in the transverse direction of the vehicle, of the lower end portion of the fuel supply pipe. In this case, the lower end portion of the down frame and the lower end portion of the fuel supply pipe may be disposed so as to be separated to the left and right with respect to the center line of the vehicle. Due to this, it may become easy to widen the left and the right footrest portions in the transverse direction of the vehicle in an equal manner on the left and on the right, while still suppressing increase in the size of the flat footboard in the transverse direction of the vehicle. Accordingly it may be possible to enhance the level of comfort for the rider of the vehicle, as compared to a case in which only one of the left and right footrest portions is increased in size while the other one is restricted.

Preferably, the diameter of the down frame may be greater than the diameter of the fuel supply pipe. In a horizontal plane or surface that includes the lower end portion of the fuel supply pipe, the distance from the inner edge, in the transverse direction of the vehicle, of the down frame to the center line of the vehicle, in the transverse direction of the vehicle, may be smaller than the distance from the inner edge, in the transverse direction of the vehicle, of the lower end portion of the fuel supply pipe to the center line of the vehicle, in the transverse direction of the vehicle. In this case, by disposing the down frame which includes a larger diameter in a position which, in the transverse direction of the vehicle, is closer to the center of the vehicle, it may become easy to increase the size of the left and right footrest portions in an equal manner on the left and on the right, while keeping the width dimension of the flat footboard compact.

Preferably, the fuel supply pipe may comprise a connection pipe that projects upward from the tank main body. As seen from the side of the vehicle, the center, in the longitudinal direction of the vehicle, of the upper end of the connection pipe overlaps the down frame. Upon or following a phantom, projected or theoretical line extending in the transverse direction of the vehicle and passing through the center, in the longitudinal direction of the vehicle, of the upper end of the connection pipe as seen in a plan view of the vehicle: the dimension in the transverse direction of the vehicle of the left footrest portion may be smaller than the dimension in the transverse direction of the vehicle of the central portion; and/or the dimension in the transverse direction of the vehicle of the right footrest portion may be smaller than the dimension in the transverse direction of the vehicle of the central portion; and/or the sum of the dimension in the transverse direction of the vehicle of the left footrest portion and the dimension in the transverse direction of the vehicle of the right footrest portion may be smaller than the dimension in the transverse direction of the vehicle of the central portion. In this case, it may be possible to make the entire flat footboard more compact in the transverse direction of the vehicle, even while elongating the left and right footrest portions forward. As such, it may be possible to enhance the level of comfort for the rider of the vehicle.

Preferably, the distance between the down frame and the fuel supply pipe in the transverse direction of the vehicle may be smaller than the width of the down frame in the transverse direction of the vehicle. In this case, it may be possible to dispose the lower end portion of the down frame and the fuel supply pipe closer to the center of the vehicle. Due to this, it may be possible to widen the left and right footrest portions to the left and to the right.

Preferably, as seen from the side of the vehicle, a front portion of the fuel tank and a lower portion of the down frame may overlap. When viewed in a plan view of the vehicle, a front portion of the fuel tank may be disposed between a lower portion of the down frame and one of the left footrest portion and/or the right footrest portion.

In this case, the fuel tank may be arranged by utilizing the space that is ensured or provided by offsetting the down frame to one of the left and the right. By doing this, it may be possible to extend the left footrest portion or the right footrest portion forward, while still suppressing increase in the size of the flat footboard in the transverse direction of the vehicle, even though, in a plan view of the vehicle, the fuel tank may be disposed between the left footrest portion or the right footrest portion and the down frame. Due to this, it may be possible to enhance the comfort of the rider. Moreover, by extending the fuel tank forward, it may be possible to keep down the height of the fuel tank, while still ensuring an adequately large capacity for the fuel tank. In other words, it may be possible to lower the flat footboard and to ensure a sufficient space for the rider to ride upon the vehicle while still preventing any portion of the fuel tank from approaching the surface of the ground too closely. In this way, it may be possible to enhance the comfort of the rider.

Preferably, the lower frame may comprise a first lower frame and a second lower frame. The first lower frame, as seen in a plan view of the vehicle, may be disposed on the same side with respect to the center line of the vehicle as the direction in which the down frame extends, and may be connected to the lower end portion of the down frame. The second lower frame, as seen in a plan view of the vehicle, may be disposed on the opposite side with respect to the center line of the vehicle to the direction in which the down frame extends, and may be connected to the lower end portion of the down frame. When viewed in a plan view of the vehicle, at least a portion of the fuel tank may be disposed between the first lower frame and the second lower frame. When viewed in a plan view of the vehicle, the second lower frame may extend to cross the center line of the vehicle from the side where the lower end portion of the down frame may be disposed. When viewed in a plan view of the vehicle, one of the left footrest portion and the right footrest portion may overlap a portion of the second lower frame. When viewed in a plan view of the vehicle, the distance from the center line of the vehicle to the outer edge of the second lower frame may be greater than the distance from the center line of the vehicle to the outer edge of the first lower frame.

In this case, when viewed in a plan view of the vehicle, one of the left footrest portion and the right footrest portion may overlap the second lower frame. Due to this, it may be possible to both ensure the rigidity of support of the left footrest portion or of the right footrest portion and also ensure that the left footrest portion or the right footrest portion may be wide. Moreover, by making the gap between the first lower frame and the second lower frame large, it may be possible to increase the dimension in the transverse direction of the vehicle of the fuel tank that is positioned between those members. Due to this, it may be possible to make the dimension of the fuel tank in the vertical dimension small, while still ensuring that the capacity of the fuel tank is adequately large. In this way, it may be possible to ensure a sufficient space for the rider to ride upon the vehicle while still ensuring an appropriate distance between the fuel tank and the surface of the ground, so that it is possible to enhance the comfort of the rider.

Preferably, a front or frontmost portion of the fuel tank may be disposed over, e.g. directly above, the second lower frame. When viewed in a plan view of the vehicle, the front or frontmost portion of the fuel tank may overlap the second lower frame. When viewed in a plan view of the vehicle, one of the left footrest portion and the right footrest portion may be disposed to the outer lateral side of the portion where the front portion of the fuel tank and the second lower frame overlap.

In this case, the fuel tank and the second lower frame may be arranged so as to be overlapped vertically by employing a space that may be provided by offsetting the down frame to one of the left and the right. Due to this, even though the left footrest portion or the right footrest portion may be disposed to the exterior of the portion where, when viewed in a plan view of the vehicle, the front or frontmost portion of the fuel tank and the second lower frame may be overlapped, it may still be possible to extend the left footrest portion or the right footrest portion forward while suppressing increase in size of the flat footboard in the transverse direction of the vehicle. By doing this, it may be possible to enhance the comfort of the rider.

It should be understood that, due to the fuel tank and the second lower frame being stacked over one another in the vertical direction (up and down direction) of the vehicle, there may be a concern that the dimension of the combination in the vertical direction may become too large. However, by extending the fuel tank forward, it may be possible to keep the height of the fuel tank low while still ensuring a sufficiently great capacity for the fuel tank. Due to this, it may be possible to ensure a sufficient space for the rider to ride upon the vehicle by lowering the height of the flat footboard while still preventing any portion of the fuel tank from being too close to the surface of the ground. Accordingly it may be possible to enhance the comfort of the rider. Moreover, with the second lower frame, it may be possible to protect the fuel tank from being damaged from underneath. Furthermore it may be simple and easy to fit the fuel supply pipe, since it may not be necessary to detour the fuel supply pipe forward of the lower frame from underneath the lower frame and to extend it upward.

Preferably, at least a portion of the connection portion between the fuel supply pipe and the fuel tank may be disposed over, e.g. directly over or above, the second lower frame, and may, in a plan view of the vehicle, overlap the second lower frame. As seen in a plan view of the vehicle, one of the left footrest portion and the right footrest portion may be disposed to the outer lateral side of the portion where the at least a portion of the connection portion between the fuel supply pipe and the fuel tank and the second lower frame overlap.

In this case, it may be possible to arrange the fuel tank, the fuel supply pipe, and the second lower frame in sequence in the vertical direction by taking advantage of the space that may be provided by offsetting the down frame to one of the left and the right. Due to this, even though, as seen in a plan view of the vehicle, the left footrest portion or the right footrest portion may be disposed to the outer lateral side of the fuel tank, the fuel supply pipe, and the second lower frame, increases in the size of the footboard in the transverse direction of the vehicle may still be suppressed. Furthermore, it may also be possible to extend the left footrest portion or the right footrest portion forward. Due to this, it may be possible to enhance the comfort from the point of view of the rider.

It should be understood that, when the fuel tank, the fuel supply pipe, and the second lower frame are arranged in sequence in the vertical direction, there may be a concern that the dimension of the combination in the vertical direction may become too large. However, by extending the fuel tank forward, it may be possible to keep the height of the fuel tank low while still ensuring a sufficiently great capacity for the fuel tank. Due to this, it may be possible to ensure a sufficient space for the rider to ride upon the vehicle by lowering the height of the flat footboard while still preventing any portion of the fuel tank from being too close to the surface of the ground. Accordingly it may be possible to enhance the comfort from the point of view of the rider.

Yet further, with the second lower frame, it may be possible to protect the fuel supply pipe from being damaged from underneath. Furthermore it may be simple and easy to fit the fuel supply pipe, since it may not be necessary to detour the fuel supply pipe forward of the lower frame from underneath the lower frame and to extend it upward.

Preferably, the fuel tank may further comprise a tank main body. A flange portion may project from the tank main body in the horizontal direction. At least a portion of the flange portion may be disposed over, e.g. directly above, the second lower frame, and may overlap the second lower frame when viewed in a plan view of the vehicle. As seen in a plan view of the vehicle, one of the left footrest portion and the right footrest portion may be disposed outward of the portion where the flange portion and the second lower frame are overlapped. In this case, it may be possible to increase the dimension of the fuel tank in the longitudinal direction of the vehicle. Moreover, it may be possible to protect the fuel tank with the lower frame.

Preferably, the fuel supply pipe may comprise a connection pipe that projects upward from the tank main body. When viewed in a plan view of the vehicle, the connection pipe preferably may not overlap the flange portion. In this case, due to the connection pipe projecting upward, it may not cause any impediment to welding the flange. Moreover, since the connection pipe is positioned at the lateral side of the down frame, accordingly the footrest portions of the flat footboard may not be restricted, even though the connection pipe is provided so as to project upward.

Preferably, as seen in a plan view of the vehicle, the flange portion may surround the periphery of the tank main body, and the boundary between the tank main body and the flange portion may include no portion that is concave, e.g. toward the tank main body or toward a tank main body side. In this case, welding the fuel tank may become simple and easy. Moreover, since the down frame may be off-center on the opposite side to the direction where the second lower frame extends, accordingly it may be possible to extend the tank main body to a position over, e.g. directly above, the second lower frame, without providing any portion that is concave, e.g. toward the tank main body or toward a tank main body side.

Preferably, the down frame may comprise a lower down frame portion that comprises a lower end portion of the down frame. The lower down frame portion may be disposed, when viewed from the front of the vehicle, on the same side with respect to the center line of the vehicle that extends in the vertical direction as the direction in which the down frame extends. The fuel supply pipe may be disposed, when viewed from the front of the vehicle, on the opposite side with respect to the center line of the vehicle that extends in the vertical direction to the direction in which the down frame extends. When viewed from the front of the vehicle, the center line of the vehicle that extends in the vertical direction may be positioned between the lower down frame portion and the fuel supply pipe. In this case, it may be possible to arrange the fuel supply pipe and the down frame close to the center line of the vehicle. Due to this, it may be possible to extend the left and right footrest portions to the left and to the right respectively.

Accordingly, in a scooter type vehicle as described above in which a fuel tank is disposed under a flat footboard, it may be made possible to lengthen the flat footboard along the direction longitudinal to the vehicle while still suppressing increase in the size of the flat footboard in the transverse direction of the vehicle, thus enhancing the comfort from the point of view of the rider.

### BRIEF DESCRIPTION OF DRAWINGS

An embodiment of the present invention will now be described, by way of example only, with reference to the accompanying drawings, which are:
- **Figure 1**: a side view of a scooter type vehicle according to an embodiment of the present invention;
- **Figure 2**: a side view of a body frame of this scooter type vehicle;
- **Figure 3**: a plan view of this body frame;
- **Figure 4**: a front elevation view of this body frame;
- **Figure 5**: a perspective view showing a fuel supply system of this scooter type vehicle and its body frame, as seen at an angle from the left front thereof;
- **Figure 6**: a perspective view showing this fuel supply system and this body frame, as seen at an angle from the left rear thereof;
- **Figure 7**: a side view showing portions of the fuel supply system and the body frame;
- **Figure 8**: a plan view showing portions of the fuel supply system and the body frame;
- **Figure 9**: a front elevation view showing portions of the fuel supply system and the body frame;
- **Figure 10**: an enlarged side view showing portions of the fuel supply system and the body frame;
- **Figure 11**: a figure showing the rear surface of a front cover;
- **Figure 12**: a perspective view showing the rear surface of the front cover;
- **Figure 13**: an enlarged plan view showing portions of the fuel supply system and the body frame;
- **Figure 14**: a cross sectional plan view showing portions of the fuel supply system and the body frame, and a portion of the front cover;
- **Figure 15**: a plan view showing portions of the fuel supply system and of the body frame of a scooter type vehicle according to another embodiment;
- **Figure 16**: a front elevation view showing portions of the fuel supply system and of the body frame of this scooter type vehicle according to the other embodiment;
- **Figure 17A**: a schematic figure showing the structure of a scooter type vehicle according to a comparison example;
- **Figure 17B**: a schematic figure showing the structure of a scooter type vehicle according to this embodiment;
- **Figure 18A**: a schematic figure showing a scooter type vehicle according to a comparison example; and
- **Figure 18B**: a schematic figure showing a scooter type vehicle according to a comparison example.

### DETAILED DESCRIPTION OF DRAWINGS

In the following, a scooter type vehicle 1 according to an embodiment of the present invention will be explained with reference to the drawings.

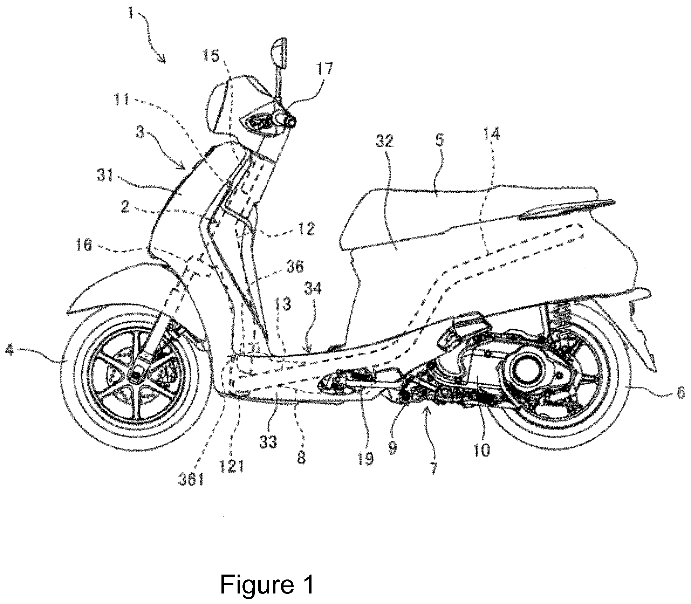

Figure 1 is a side view of this scooter type vehicle 1. The scooter type wheel 4, a seat 5, a rear wheel 6, a power unit 7, and a fuel tank 8.

It should be understood that, in this specification, the longitudinal direction (front and rear direction) of the scooter type vehicle 1, the vertical direction (up and down direction) of the scooter type vehicle 1, and the transverse direction (left and right direction) of the scooter type vehicle 1 are the longitudinal, the vertical, and the transverse direction of the scooter type vehicle 1 from the point of view of a person riding on it. Particularly, references to left, right, front or forward and rear or backward made herein are from the point of view of a person riding on the vehicle 1. Moreover, it will be supposed that the longitudinal direction not only means the direction that is parallel toward the front to rear direction of the scooter type vehicle 1, but also includes any direction that is inclined within a range of ±45° toward the front to rear direction of the scooter type vehicle 1. To put this in another manner, any direction that is closer toward the front to rear direction of the vehicle 1 than to its transverse direction or to its vertical direction will be considered to be included in the definition of "longitudinal direction".

In a similar manner, it will be supposed that the vertical direction also includes any axial line that is inclined within a range of ±45° to the vertical direction of the scooter type vehicle 1. To put this in another manner, any direction that is closer to the vertical direction of the vehicle 1 than to its longitudinal direction or to its transverse direction will be considered to be included in the definition of "vertical direction".

Furthermore, it will be supposed that the transverse direction also includes any direction that is inclined within a range of ±45° to the transverse direction of the scooter type vehicle 1. To put this in another manner, any direction that is closer to the transverse direction of the vehicle 1 than to its longitudinal direction or to its vertical direction will be considered to be included in the definition of "transverse direction".

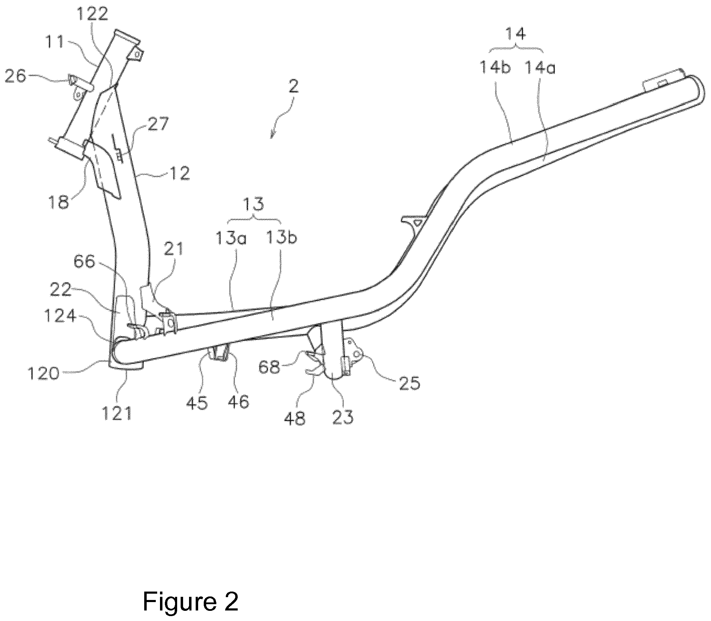

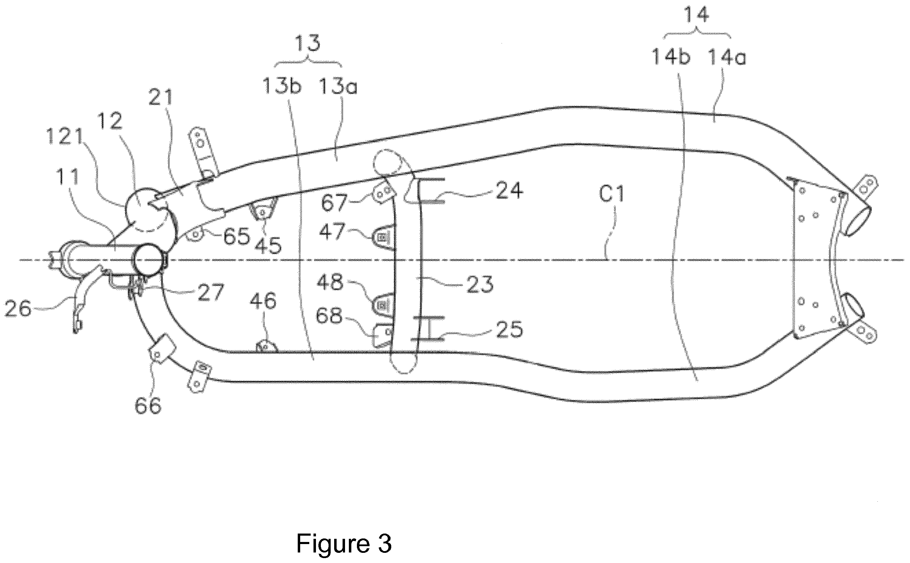

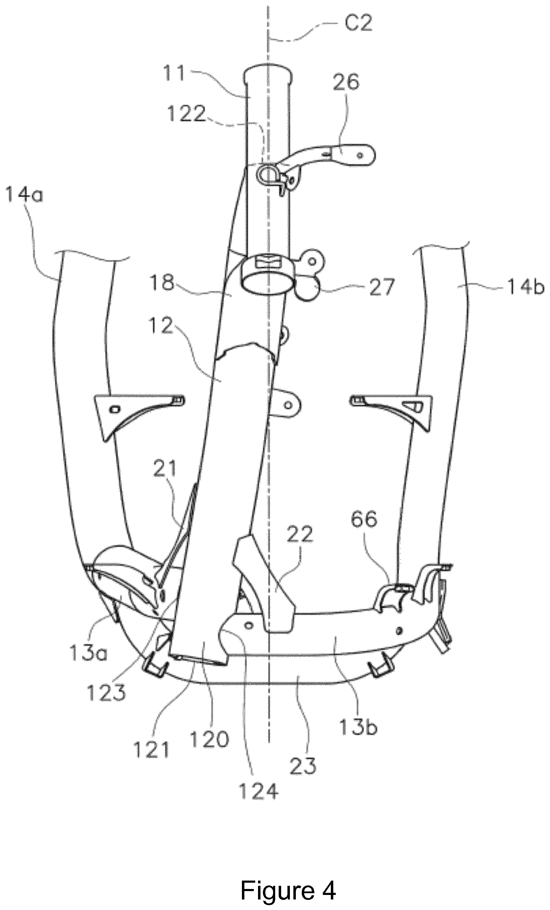

Figure 2 is a side view of the vehicle body frame 2. Figure 3 is a plan view of the vehicle body frame 2. Moreover, Figure 4 is a front elevation view of the vehicle body frame 2. As shown in Figures 2 through 4, the vehicle body frame 2 comprises a head pipe 11, a down frame 12, a lower frame 13, and a seat frame 14. As shown in Figure 3, when viewed in a plan view of the vehicle, the center line C1 in the transverse direction of the vehicle extends through the head pipe 11 in the longitudinal direction of the vehicle.

As shown in Figure 1, a steering shaft 15 is inserted into the head pipe 11 so as to be rotatable in right and left directions therein. The lower portion of this steering shaft 15 is connected to a front fork 16. The front fork 16 rotatably supports a front wheel 4. The upper portion of the steering shaft 15 is connected to handlebars 17.

As shown in Figure 2, the down frame 12 extends downward from the head pipe 11. In more detail, the upper portion of the down frame 12 extends downward and toward the rear from the head pipe 11. The lower portion of the down frame 12 extends downward and forward from the upper portion of the down frame 12. When viewed from the side of the vehicle, in the vertical direction, the down frame 12 has a curved shape that is convex toward the rear at its intermediate portion.

A reinforcement member 18 is fixed across between the down frame 12 and the head pipe 11. As shown in Figure 3 and Figure 4, the down frame 12 extends downward and toward the right side from the head pipe 11 so that, when viewed in a plan view of the vehicle, at least a portion of a lower end portion 121 of the down frame 12 is disposed to the right side with respect to the center line C1. In more detail, in the case of this embodiment, the entire lower end portion 121 of the down frame 12 is disposed to the right side with respect to the center line C1. As shown in Figure 4, when viewed from the front of the vehicle, an upper end portion 122 of the down frame 12 is disposed so as to overlap the center line C2 of the vehicle which extends in the vertical direction. Moreover, when viewed from the front of the vehicle, the down frame 12 extends approximately in the shape of a straight line.

The down frame 12 includes a lower down frame portion 120. This lower down frame portion 120 includes the lower end portion 121 of the down frame 12. As shown in Figure 4, when viewed from the front of the vehicle, the lower down frame portion 120 is disposed to the right side with respect to the center line C2 of the vehicle extending in the vertical direction. In other words, when viewed from the front of the vehicle, the lower down frame portion 120 is disposed on the same side with respect to the center line C2 of the vehicle that extends in the vertical direction as the direction in which the down frame 12 extends.

It should be understood that, in this description of the embodiment, the expression "the right side with respect to the center line C1 or C2 of the vehicle" could be altered to "the same side as the direction in which the down frame 12 extends with respect to the center line C1 or C2 of the vehicle". Moreover, the expression "the left side with respect to the center line C1 or C2 of the vehicle" could be altered to "the opposite side to the direction in which the down frame 12 extends with respect to the center line C1 or C2 of the vehicle".

The lower frame 13 is connected to the lower down frame portion 120. The lower frame 13 extends toward the rear from the down frame 12. The lower frame 13 is connected to the head pipe 11 only via the down frame 12. In other words, the vehicle body frame 2 does not include any portion that extends to the left side from the head pipe 11 and that is connected to the lower frame 13.

The lower frame 13 comprises a first lower frame portion 13a and a second lower frame portion 13b. As seen in a plan view of the vehicle, the first lower frame portion 13a is disposed on the right side with respect to the center line C1 of the vehicle. When viewed from the side of the vehicle, this first lower frame portion 13a extends toward the rear from the lower end portion 121 of the down frame 12. As seen in a plan view of the vehicle, the first lower frame portion 13a does not intersect the center line C1 of the vehicle.

As seen in a plan view of the vehicle, the second lower frame portion 13b extends toward the rear and toward the left side from the lower down frame portion 120. The front portion of this lower frame portion 13b extends from the right toward the left. As shown in Figure 4, the second lower frame portion 13b extends from the lower down frame portion 120 toward the left side of the center line C2 of the vehicle. When viewed in a plan view of the vehicle, the front portion of the second lower frame portion 13b intersects the center line C1 of the vehicle. Moreover, when viewed in a plan view of the vehicle, the distance from the center line C1 of the vehicle to the outer edge of the second lower frame portion 13b is greater than the distance from the center line C1 of the vehicle to the outer edge of the first lower frame portion 13a.

As shown in Figure 4, the connection portion 124 between the second lower frame portion 13b and the down frame 12 (hereinafter this will be termed the "second connection portion 124") is positioned below or lower than the connection portion 123 between the first lower frame portion 13a and the down frame 12 (hereinafter this will be termed the "first connection portion 123"). In more detail, the upper end portion of the second connection portion 124 is positioned below or lower than the upper end portion of the first connection portion 123. Moreover, the lower end portion of the second connection portion 124 is positioned below or lower than the lower end portion of the first connection portion 123.

A first reinforcement member 21 is attached to the first lower frame portion 13a and to the down frame 12. A second reinforcement member 22 is attached to the second lower frame portion 13b and to the down frame 12.

The seat frame 14 is connected to the lower frame 13. This seat frame 14 extends toward the rear and upward from the rear portion of the down frame 12.The seat frame 14 comprises a first seat frame portion 14a and a second seat frame portion 14b. The first seat frame portion 14a is connected to the first lower frame portion 13a. The first seat frame portion 14a extends toward the rear and upward from the rear portion of the first lower frame portion 13a. Moreover, the second seat frame portion 14b is connected to the second lower frame portion 13b. The second seat frame portion 14b extends toward the rear and upward from the rear portion of the second lower frame portion 13b.

The vehicle body frame 2 comprises a cross frame 23. This cross frame 23 is connected to the first lower frame portion 13a and to the second lower frame portion 13b. The cross frame 23 extends in the transverse direction of the vehicle, and is disposed so as to bridge between the first lower frame portion 13a and the second lower frame portion 13b. The cross frame 23 is shaped so as to be curved downward.

As shown in Figure 1, the vehicle body cover 3 comprises a front cover 31, a rear cover 32, and a lower cover 33. The front cover 31 shrouds the outside of the head pipe 11 and the down frame 12. The rear cover 32 shrouds the outside of the seat frame 14.

The seat 5 is disposed over the rear cover 32. The seat 5 is disposed rearward of the head pipe 11. The seat 5 is supported upon the vehicle body frame 2. In more detail, the seat 5 is supported upon the seat frame 14 via stays not shown in the figures.

The lower cover 33 is disposed between the front cover 31 and the rear cover 32. This lower cover 33 shrouds the outside of the lower frame 13. The upper surface of the lower cover 33 comprises a flat footboard 34. This flat footboard 34 is disposed below and/or lower than the seat 5 and forward thereof. Moreover, the flat footboard 34 is disposed over, e.g. directly over, the lower frame 13. The flat footboard 13 is provided so that the rider can place his feet upon it. This flat footboard 13 has a flat shape.

It should be understood that the expression "flat shape" in relation to the flat footboard 34 means that it is flat to the extent that the rider is able to ride comfortably with his feet placed on any portion of the flat footboard 34. In other words, it would be acceptable for the flat footboard to be formed to include dimples and/or protuberances upon its surface so that it has a good non-slip characteristic, or the like.

The power unit 7 is disposed under, e.g. directly under, the seat 5. This power unit 7 comprises an engine 9 and a transmission 10. The power unit 7 rotatably supports the rear wheel 6. The rear wheel 6 is also supported by the vehicle body frame 2 via a rear suspension.

The power unit 7 is supported by the vehicle body frame 2 so as to be pivotable to some extent with respect thereto. As shown in Figure 2 and Figure 3, power unit support portions 24 and 25 are connected to the cross frame 23. The power unit 7 is attached to these power unit support portions 24 and 25. The power unit 7 is pivotably supported via the power unit support portions 24 and 25, so as to be capable of moving to some extent.

As shown in Figure 1, the fuel tank 8 is disposed within the lower cover 33. The fuel tank 8 is located under, e.g. directly under, the flat footboard 34.

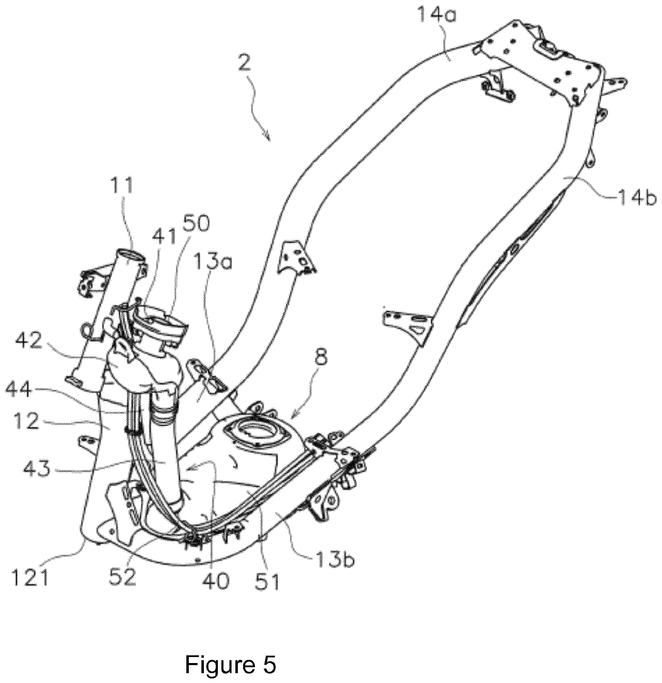

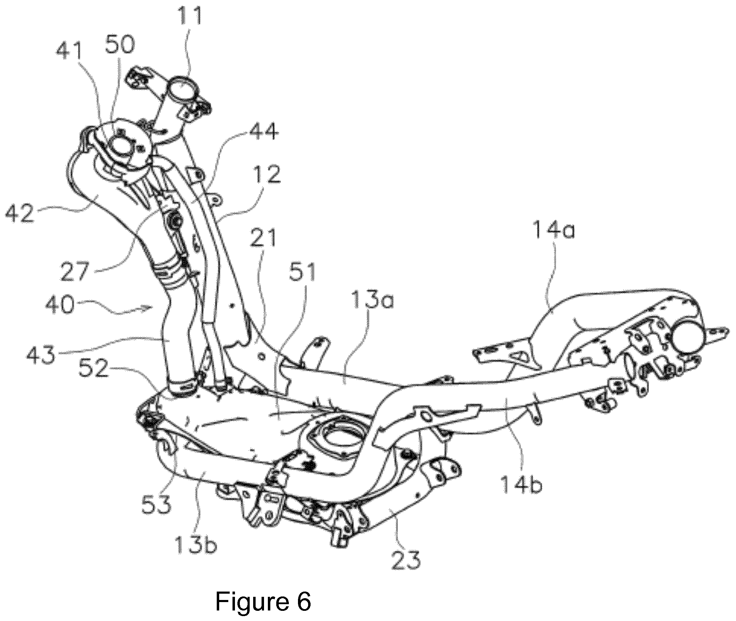

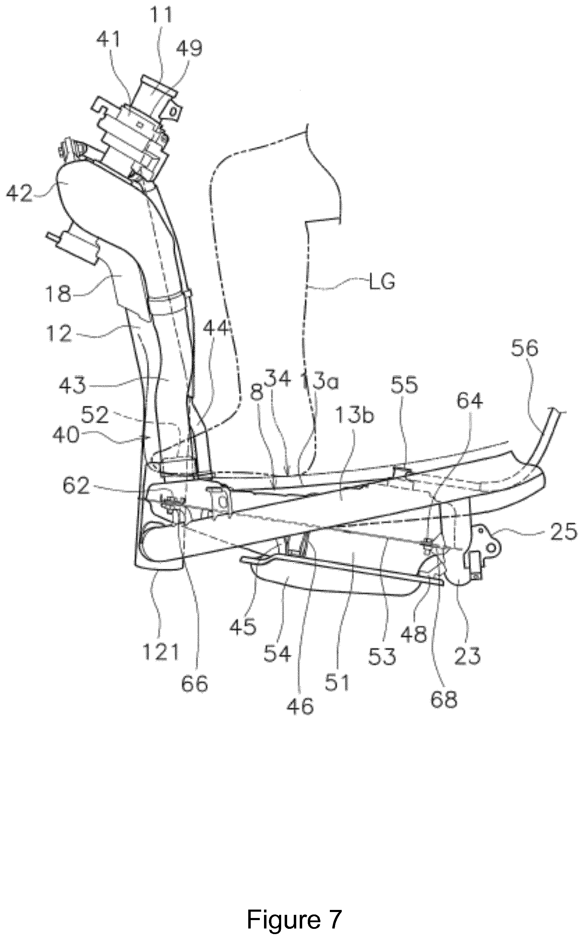

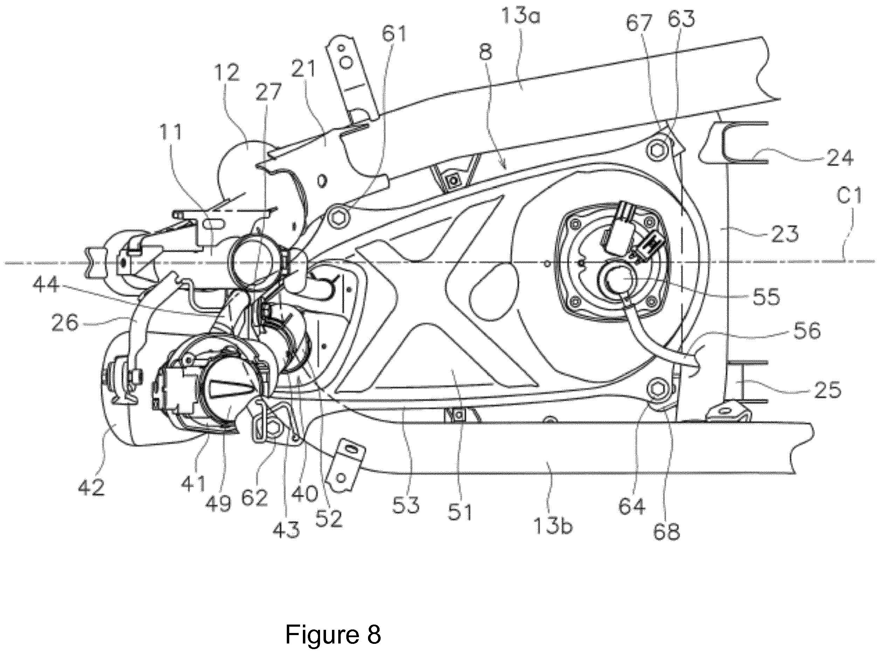

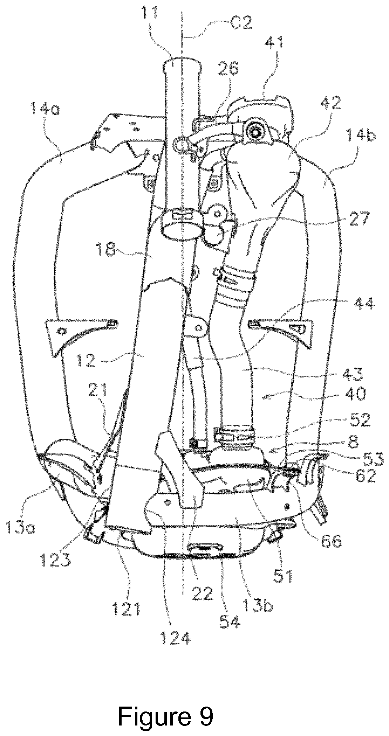

Figure 5 is a perspective view showing the fuel tank 8 of this scooter type vehicle 1 and a structure for refilling fuel into the fuel tank 8 (hereinafter termed the "fuel supply system"), and also showing the vehicle body frame 2, when viewed at an angle from the front left thereof. Figure 6 is a perspective view showing this fuel supply system and the body frame 2, when viewed at an angle from the rear left thereof. Moreover, Figure 7 is a side view showing portions of the fuel supply system and the body frame 2. Figure 8 is a plan view showing portions of the fuel supply system and the body frame 2. Figure 9 is a front elevation view showing portions of the fuel supply system and the body frame 2.

The fuel supply system of this scooter type vehicle 1 comprises a fuel supply portion 41, a sub-tank 42, a fuel supply pipe 40, and the abovementioned fuel tank 8. The fuel supply portion 41 is located higher than the flat footboard 34. The fuel supply portion 41 is disposed toward the left side of the head pipe 11. As shown in Figure 5 and Figure 6, the fuel supply portion 41 includes a fuel supply aperture 50. As shown in Figure 7 and Figure 8, a filler cap 49 that opens and closes the fuel supply aperture 50 is attached to the fuel supply portion 41. This filler cap 49 is located at the lateral side of the head pipe 11.

The sub-tank 42 is connected to the fuel supply portion 41. The fuel supply portion 41 is disposed at the left side of the head pipe 11. The sub-tank 42 is disposed under, e.g. directly under, the fuel supply portion 41. The sub-tank 42 is disposed at the left side of the head pipe 11 and of the down frame 12. When viewed from the side of the vehicle, the sub-tank 42 overlaps the head pipe 11. When viewed from the side of the vehicle, the sub-tank 42 overlaps the down frame 12.

It should be understood that the fuel supply system of the scooter type vehicle 1 according to this embodiment is disposed more to the left side than the head pipe 11. Generally, it is often the case that the rider mounts the scooter type vehicle 1 from the left side. Moreover, it is often the case that the rider dismounts the scooter type vehicle 1 toward the left side. Yet further, a side stand 19 is provided on the left side portion of the scooter type vehicle 1 of this embodiment (refer to Figure 1). Accordingly, due to the fact that the fuel supply system is provided to the left side of the head pipe 11, as in the case of the scooter type vehicle 1 according to this embodiment, the task of supplying fuel after the rider has dismounted to the left side of the scooter type vehicle 1 is easy. Moreover, after the task of supplying fuel has been completed, it is easy for the rider to mount the scooter type vehicle 1.

A first sub-tank support portion 26 is connected to the head pipe 11. This first sub-tank support portion 26 projects to the left side from the head pipe 11. A second sub-tank support portion 27 is connected to the down frame 12. This second sub-tank support portion 27 projects to the left side from the down frame 12. The sub-tank 42 is attached to the first sub-tank support portion 26 and to the second sub-tank support portion 27. In other words, the sub-tank 42 is supported by the head pipe 11 via the first sub-tank support portion 26. Moreover, the sub-tank 42 is supported by the down frame 12 via the second sub-tank support portion 27.

The fuel supply pipe 40 is connected to the fuel tank 8, and extends upward from the fuel tank 8. This fuel supply pipe 40 includes a fuel pipe 43. The upper end portion of the fuel pipe 43 is connected to the sub-tank 42. The fuel pipe 43 extends downward from the sub-tank 42. As seen from the front of the vehicle, the fuel pipe 43 is disposed toward the left side with respect to the center line C2 of the vehicle that extends in the vertical direction. In other words, when viewed from the front of the vehicle, with respect to the center line C2 of the vehicle that extends in the vertical direction, the fuel pipe 43 is disposed on the opposite side of the vehicle from the direction in which the down frame 12 extends. Thus, the center line C2 of the vehicle that extends in the vertical direction is located between the lower down frame portion 120 and the fuel pipe 43 when viewed from the front of the vehicle.

A breather pipe 44 is connected to the sub-tank 42 and the fuel tank 8. This breather pipe 44 extends downward from the sub-tank 42. At least a portion of the breather pipe 44 is positioned between the down frame 12 and the fuel pipe 43 when viewed from the front of the vehicle. Moreover, at least a portion of the breather pipe 44 overlaps the down frame 12 when viewed from the front of the vehicle. Also, at least a portion of the breather pipe 44 overlaps the fuel pipe 43 when viewed from the front of the vehicle.

When viewed in a plan view of the vehicle, at least a portion of the fuel tank 8 is disposed between the first lower frame portion 13a and the second lower frame portion 13b. The fuel tank 8 comprises a tank main body 51 and a flange portion 53. The tank main body 51 includes an internal space for storage of fuel. The tank main body 51 is disposed under, e.g. directly under, the flat footboard 34.

A front or frontmost portion of the tank main body 51 is disposed to the left side of the down frame 12. As shown in Figure 7, when viewed from the side of the vehicle, the front or frontmost portion of the tank main body 51 overlaps the down frame 12. The front or frontmost portion of the tank main body 51 is disposed over, e.g. directly above the second lower frame portion 13b. As shown in Figure 8, when viewed in a plan view of the vehicle, the front or frontmost portion of the tank main body 51 overlaps the second lower frame portion 13b.

A rear or rearmost portion of the tank main body 51 is disposed over, e.g. directly above, the cross frame 23. As shown in Figure 8, when viewed in a plan view of the vehicle, the rear or rearmost portion of the tank main body 51 overlaps the cross frame 23. A portion of the tank main body 51 is disposed between the first lower frame portion 13a and the second lower frame portion 13b. As seen from the side of the vehicle, a portion of the tank main body 51 overlaps the first lower frame portion 13a., When viewed from the side of the vehicle, a portion of the tank main body 51 overlaps the second lower frame portion 13b.

The bottom surface of the tank main body 51 is positioned under or lower than the first lower frame portion 13a and the second lower frame portion 13b. A tank guard 54 is disposed under, e.g. directly beneath, the bottom surface of the tank main body 51. A first tank guard support portion 45 is connected to the first lower frame portion 13a. A second tank guard support portion 46 is connected to the second lower frame portion 13b. Moreover, a third tank guard support portion 47 and a fourth tank guard support portion 48 are connected to the cross frame 23. The tank guard 54 is attached to these first through fourth tank guard support portions 45 through 48.

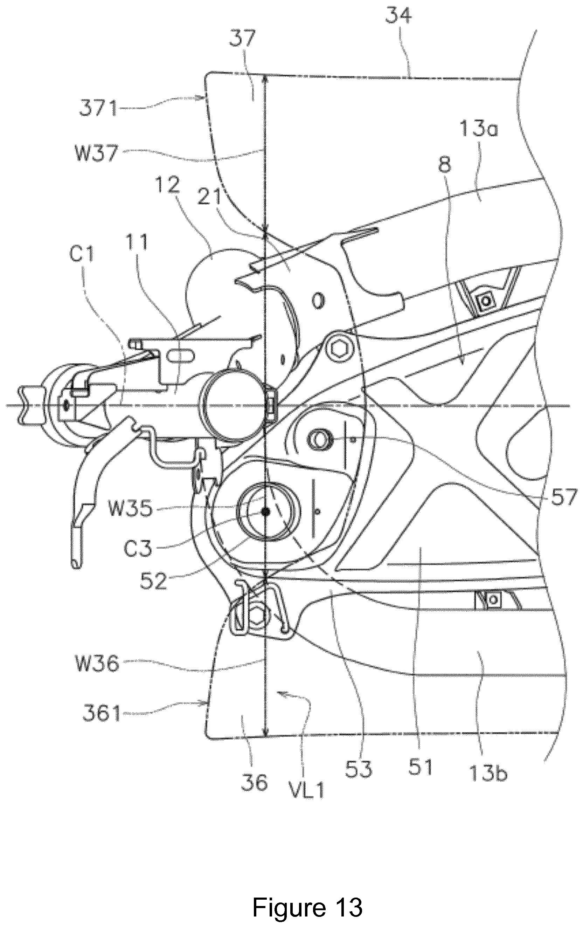

A fuel discharge portion 55 is provided at the rear portion of the upper surface of the tank main body 51. A fuel take-out conduit 56 is connected to this fuel discharge portion 55. The fuel take-out conduit 56 is connected to a fuel injection device (not shown in the drawings) which is attached to the abovementioned engine 9. An air vent 57 (refer to Figure 13) is provided at the rear portion of the upper surface of the tank main body 51. The breather pipe 44 mentioned above is connected to this air vent 57.

The fuel supply pipe 40 comprises a connection pipe 52. This connection pipe 52 is connected to a front portion of the upper surface of the tank main body 51. For example, the connection pipe 52 may be connected to the tank main body 51 by welding. The connection pipe 52 projects upward from the tank main body 51. The connection pipe 52 is connected to the aforementioned fuel pipe 43. The connection pipe 52 is disposed to the left side of the down frame 12. When viewed from the side of the vehicle, a portion of the connection pipe 52 overlaps the down frame 12. When viewed in a plan view of the vehicle, at least a portion of the connection pipe 52 is disposed to the left side with respect to the center line C1. In this embodiment, in a plan view of the vehicle, the entire connection pipe 52 is disposed to the left side with respect to the center line C1.

The connection pipe 52 is disposed over, e.g. directly above, the second lower frame portion 13b. When viewed in a plan view of the vehicle, a portion of the connection pipe 52 overlaps the second lower frame portion 13b. A portion of the connection portion between the connection pipe 52 and the tank main body 51 is disposed over, e.g. directly above, the second lower frame portion 13b. When viewed in a plan view of the vehicle, a portion of the connection portion between the connection pipe 52 and the tank main body 51 overlaps the second lower frame portion 13b. The lower end portion 121 of the down frame 12 and the connection pipe 52 are near the center line C1 of the vehicle. The distance in the transverse direction of the vehicle between the down frame 12 and the fuel supply pipe is smaller than the width of the down frame 12 in the transverse direction of the vehicle.

As shown in Figure 9, center line C2 of the vehicle in the transverse direction of the vehicle is positioned between the inner edge of the lower end portion 121 of the down frame 12 in the transverse direction of the vehicle and the inner edge of the connection pipe 52 in the transverse direction of the vehicle. The diameter of the down frame 12 is greater than the diameter of the connection pipe 52. Moreover, the distance from the inner edge of the lower portion of the down frame 12 in the transverse direction of the vehicle to the center line C2 of the vehicle in the transverse direction of the vehicle is smaller than the distance from the inner edge of the connection pipe 52 in the transverse direction of the vehicle to the center line C2 of the vehicle in the transverse direction of the vehicle.

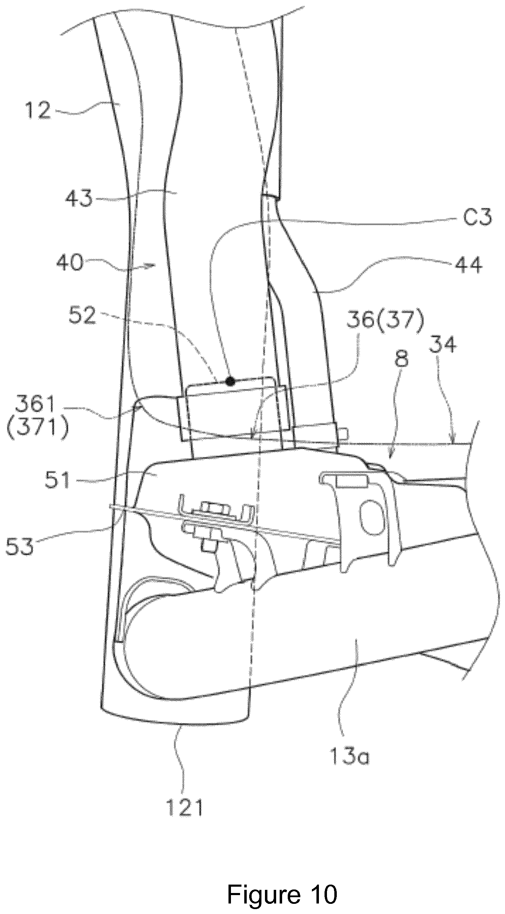

Figure 10 is an enlarged side view showing portions of the fuel supply system and of the body frame 2. As shown in Figure 10, at least a portion of the connection pipe 52 overlaps the down frame 12 when viewed from the side of the vehicle. In more detail, at least a portion of an upper or upmost end of the connection pipe 52 overlaps the down frame 12 when viewed from the side of the vehicle. Moreover, at least a portion of a lower or lowermost end of the connection pipe 52 overlaps the down frame 12 when viewed from the side of the vehicle. As seen from the front of the vehicle, the portion where the connection pipe 52 and the fuel pipe 43 are connected overlaps the down frame 12. As shown in Figure 9, the upper end of the connection pipe 52, the fuel pipe 43, and the fuel supply portion 41 are all disposed on the same side with respect to the center line C2 of the vehicle which extends in the vertical direction when viewed from the front of the vehicle. The upper end of the connection pipe 52 is positioned under, e.g. directly under, the fuel supply portion 41.

As shown in Figure 1, the connection pipe 52 is disposed inside the front cover 31. Moreover, when viewed from the side of the vehicle, the aforementioned front wheel 4 is disposed in front of, e.g. directly in front of, the lower end portion 121 of the down frame 12, of the connection pipe 52, and of the fuel tank 8.

The flange portion 53 projects from the tank main body 51 in the horizontal direction. The fuel tank 8 is divided vertically and comprises two structural members, and these members are integrated together by being welded together at the flange portion 53. When viewed in a plan view of the vehicle, the flange portion 53 surrounds the periphery of the tank main body 51. When viewed from the vertical direction with respect to the flange portion 53, the boundary between the tank main body 51 and the flange portion 53 includes no portion concaved toward the tank main body 51.

A portion of the flange portion 53 is disposed over, e.g. directly above, the second lower frame portion 13b. When viewed in a plan view of the vehicle, a portion of the flange portion 53 overlaps over the second lower frame portion 13b. The front or frontmost end portion of the flange portion 53 is positioned forwardly of the connection pipe 52. The axial line of the connection pipe 52 is inclined upward and toward the front. However, the connection pipe 52 is positioned behind or rearwardly of the flange portion 53, so that, when viewed in a plan view of the vehicle, the front end portion of the connection pipe 52 does not overlap the flange portion 53.

The flange portion 53 comprises a first front fixing portion 61. This first front fixing portion 61 is disposed to the left side of the first lower frame portion 13a. A first front support portion 65 is connected to the first lower frame portion 13a. This first front support portion 65 projects to the left side from the first lower frame portion 13a. Moreover, the first front fixing portion 61 of the flange portion 53 is attached to the first front support portion 65.

The flange portion 53 comprises a second front fixing portion 62. This second front fixing portion 62 is disposed in front or forwardly of the second lower frame portion 13b. The second front fixing portion 62 is positioned forwardly of the first front fixing portion 61. A second front support portion 66 is connected to the second lower frame portion 13b. This second front support portion 66 projects forward from the second lower frame portion 13b. Moreover, the second front fixing portion 62 of the flange portion 53 is attached to the second front support portion 66.

The flange portion 53 also comprises a first rear fixing portion 63. This first rear fixing portion 63 is disposed rearward or backwardly of the first front fixing portion 61. The first rear fixing portion 63 is disposed to the left side of the first lower frame portion 13a. This first rear fixing portion 63 is disposed in front, e.g. directly in front, of the cross frame 23. A first rear support portion 67 is connected to the cross frame 23. This first rear support portion 67 projects forward from the cross frame 23. Moreover, the first rear fixing portion 63 of the flange portion 53 is attached to the first rear support portion 67.

The flange portion 53 also comprises a second rear fixing portion 64. This second rear fixing portion 64 is disposed rearward or backwardly of the second front fixing portion 62. The second rear fixing portion 64 is disposed to the right side of the second lower frame portion 13b. This second rear fixing portion 64 is disposed in front, e.g. directly in front, of the cross frame 23. A second rear support portion 68 is connected to the cross frame 23. This second rear support portion 68 projects forwardly from the cross frame 23. Moreover, the second rear fixing portion 64 of the flange portion 53 is attached to the second rear support portion 68.

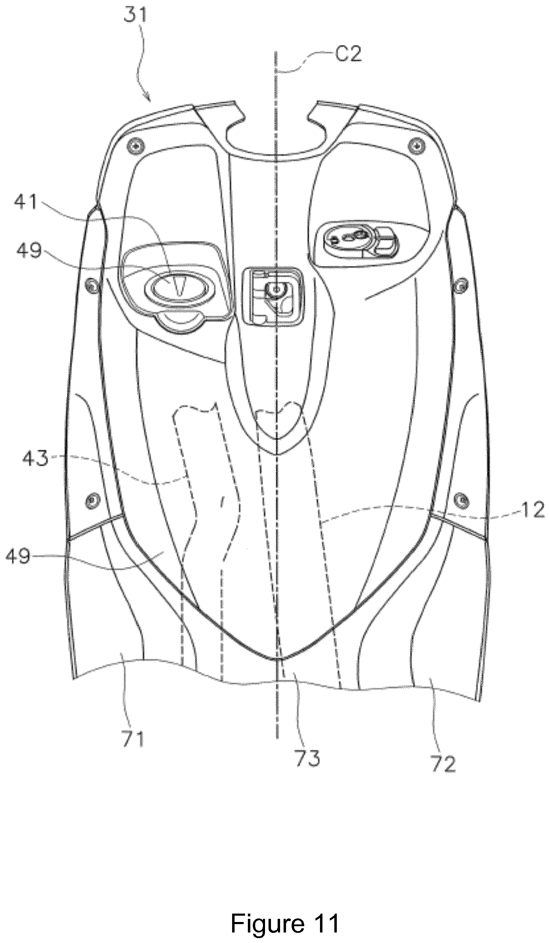

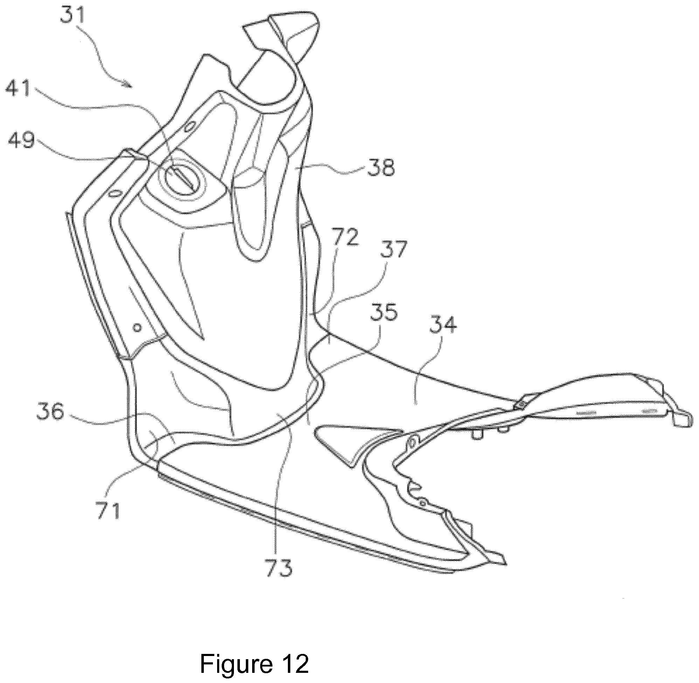

Figure 11 is a figure showing the rear surface of the front cover 31. Figure 12 is a perspective view showing the rear surface of the front cover 31. As shown in Figure 11 and Figure 12, the rear surface of the front cover 31 comprises a leg shield 38. This leg shield 38 extends upward from the front edge of the flat footboard 34. Accordingly, the rider is limited by the leg shield 38 in the position in which he extends his legs forward. The leg shield 38 covers over the head pipe 11 and the down frame 12 from the rear. The leg shield also covers the fuel supply pipe 40 from the rear. The fuel supply portion 41 is attached to the leg shield 38.

Figure 13 is an enlarged plan view showing portions of the fuel supply system and the vehicle body frame 2. It should be understood that in Figure 13, for the sake of simplicity of explanation, the fuel supply portion 41, the sub-tank 42, and the fuel pipe 43 are omitted. Moreover, in Figure 13, the position of the flat footboard 34 is shown by a double dotted broken line. As shown in Figure 12 and Figure 13, the flat footboard 34 comprises a central portion 35, a left footrest portion 36, and a right footrest portion 37. The central portion 35 is disposed behind, e.g. directly behind, the down frame 12 and the connection pipe 52. The front edge portion of the central portion 35 has a shape that tapers toward the rear. In other words, the width from left to right of the front edge portion of the central portion 35 becomes smaller toward the rear.

The left footrest portion 36 is disposed forwardly of the central portion 35, and moreover to the left side of the down frame 12 and the connection pipe 52. The right footrest portion 37 is disposed forwardly of the central portion 35, and moreover is positioned to the right side of the down frame 12 and the connection pipe 52.

As shown in Figure 1, the front end portion 361 of the left footrest portion 36 is disposed rearward of the rear point of the front wheel 4. As shown in Figure 10, the front end portion 361 of the left footrest portion 36 is disposed forwardly of the rear end of the lower end portion 121 of the down frame 12 and the rear end of the connection pipe 52. Moreover, the right footrest portion 37 is provided so as to be symmetrical with the left footrest portion 36, right to left. In other words, the longitudinal dimensions of the left and right footrest portions 36 and 37 are the same, while their transverse dimensions are the same but reversed. Accordingly, just like the front end portion 361 of the left footrest portion 36, the front end portion 371 of the right footrest portion 37 is disposed rearwardly of the rear point of the front wheel 4. Just like the front end portion 361 of the left footrest portion 36, the front end portion 371 of the right footrest portion 37 is disposed forward the rear end of the lower end portion 121 of the down frame 12 and the rear end of the connection pipe 52.

It should be understood that, in Figure 7 and Figure 10, the positions of the flat footboard 34 and the leg shield 38 are shown by double dotted broken lines. In more detail, the positions of the outermost sides of the flat footboard 34 and the positions of the outermost sides of the leg shield 34 that extend upward from those positions are shown by the double dotted broken lines.

As shown in Figure 10, when viewed from the side of the vehicle, the front or frontmost end portion of the tank main body 51 is overlapped over the lower portion of the down frame 12. Moreover, at least a portion of the left footrest portion 36 and at least a portion of the right footrest portion 37 are positioned forwardly of the front end of the lower end portion of the connection pipe 52. In more detail, the front end portion 361 of the left footrest portion 36 and the front end portion 371 of the right footrest portion 37 are positioned forwardly of the front end of the lower end portion of the connection pipe 52.

As shown in Figure 13, when viewed in a plan view of the vehicle, the front or frontmost end portion of the tank main body 51 is disposed between the lower portion of the down frame 12 and the left footrest portion 36.

As seen in a plan view of the vehicle, the left footrest portion 36 is disposed to the left side of the portion where the front or frontmost portion of the tank main body 51 and the second lower frame portion 13b overlap one another. When viewed in a plan view of the vehicle, the left footrest portion 36 is disposed to the left side of the portion where at least a portion of the connection portion between the connection pipe 52 and the tank main body 51 and the second lower frame portion 13b overlap one another. Moreover, when viewed in a plan view of the vehicle, the left footrest portion 36 is disposed to the left side of the portion where the flange portion 53 and the second lower frame portion 13b overlap one another.

The inner edge of the left footrest portion 36 is angled so as to approach the center line C1 of the vehicle towards the rear. Accordingly, the dimension in the transverse direction of the rear or rearward portion of the left footrest portion 36 is larger than the dimension in the transverse direction of the front or frontmost portion of the left footrest portion 36. In other words, the left footrest portion 36 has a shape in which a width dimension is increased toward the rear. Accordingly, even though the left footrest portion 36 is extended toward the front, the rider is still able to shift his left foot forward simply and easily. The right footrest portion 37 has a shape that is generally symmetrical with the left footrest portion 36, left and right. Accordingly, in a similar manner to the case for the left footrest portion 36, even though the right footrest portion 37 is extended toward the front, still the rider is able to shift his right foot forward simply and easily.

As shown in Figure 7, when viewed from the side of the vehicle, the center C3 in the longitudinal direction of the vehicle of the upper end of the connection pipe 52 overlaps the down frame 12. In Figure 13, a phantom or theoretical line VL1 is a straight line that extends in the transverse direction of the vehicle and that, when viewed in a plan view of the vehicle, passes through the center C3 in the longitudinal direction of the vehicle of the upper end of the connection pipe 52. On this phantom or theoretical line VL1, the dimension W36 of the left footrest portion 36 in the transverse direction of the vehicle is smaller than the dimension W35 of the central portion 35 in the transverse direction of the vehicle. Moreover, on the phantom or theoretical line VL1, the dimension W37 of the right footrest portion 37 in the transverse direction of the vehicle is smaller than the dimension W35 of the central portion 35 in the transverse direction of the vehicle. Even further, on the phantom or theoretical line VL1, the sum of the dimension W36 of the left footrest portion 36 in the transverse direction of the vehicle and the dimension W37 of the right footrest portion 37 in the transverse direction of the vehicle is smaller than the dimension W35 of the central portion 35 in the transverse direction of the vehicle.

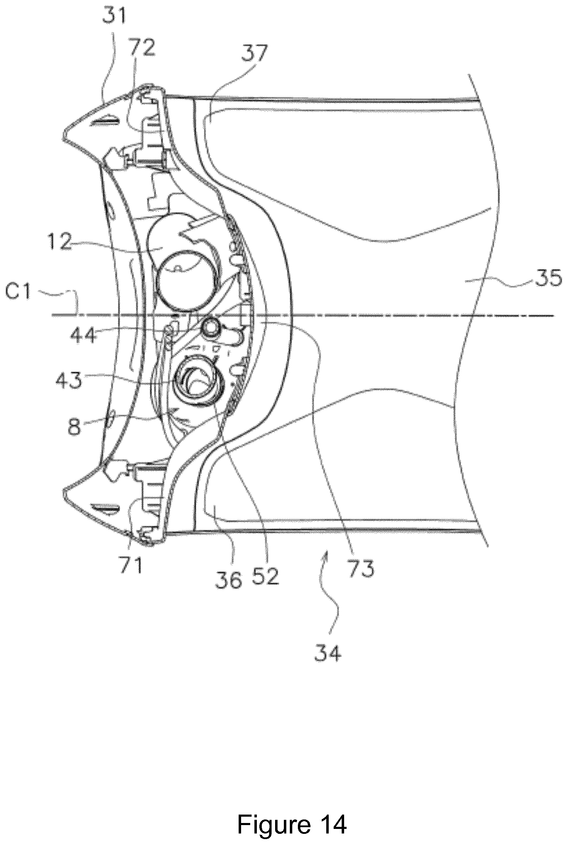

Figure 14 is a cross sectional plan view showing portions of the fuel supply system, of the body frame 2, and of the leg shield 38. The leg shield 38 comprises a left bottom portion 71, a right bottom portion 72, and a center bottom portion 73. The left bottom portion 71 is positioned forward, e.g. directly forward, of the left footrest portion 36. The right bottom portion 72 is positioned forward, e.g. directly forward, of the right footrest portion 37. The center bottom portion 73 is positioned forward, e.g. directly forward, of the central portion 35.

The left bottom portion 71 extends upward and toward the rear from the left footrest portion 36. The front end portion 361 and the left bottom portion 71 of the left footrest portion 36 are connected together by a smooth curved surface. The left bottom portion 71 and the right bottom portion 72 have shapes that are generally symmetrical left and right. Thus, the right bottom portion 72 extends upward and toward the rear from the right footrest portion 37. The front end portion 371 and the right bottom portion 72 of the right footrest portion 37 are connected together by a smooth curved surface. Due to the left bottom portion 71 and the right bottom portion 72 having shapes of this type, the spaces in which the rider can place his feet are enlarged in the longitudinal direction of the vehicle.

The center bottom portion 73 extends upward from the central portion 35. However, the center bottom portion 73 does not extend toward the rear from the central portion 35. In more detail, the center bottom portion 73 extends upward and toward the front from the central portion 35.

It should be understood that the position of the dividing line between the leg shield 38 and the flat footboard 34 is not to be considered as being limited in any way. For example, it would be possible to arrange for a member that includes the leg shield 38 to constitute a portion of the flat footboard 34. Alternatively it would be possible to arrange for a member that includes the flat footboard 34 to constitute a portion of the leg shield 38. In this embodiment, a portion of the left footrest portion 36 and a portion of the right footrest portion 37 are constituted by a member that includes the leg shield 38.

With the scooter type vehicle 1 according to this embodiment as described above, when viewed in a plan view of the vehicle, the lower end portion 121 of the down frame 12 is disposed to the right side with respect to the center line C1 of the vehicle. Moreover, when viewed in a plan view of the vehicle, the connection pipe 52 is disposed to the left side with respect to the center line C1 of the vehicle. Due to this, it is possible to guarantee wider spaces on both sides of the lower end portion 121 of the down frame 12 and the connection pipe 52, as compared to the case in which the lower end portion 121 of the down frame 12 is disposed upon the center line C1 of the vehicle and the connection pipe 52 is disposed at the lateral side thereof. With the scooter type vehicle 1 according to this embodiment, the left and right footrest portions 36 and 37 are disposed respectively at the left and right sides of the lower end portion 121 of the down frame 12 and of the connection pipe 52. Due to this, while restraining increase in the size of the flat footboard 34 in the transverse direction of the vehicle, it is still possible to increase the length of the flat footboard 34 in the longitudinal direction at its left and right footrest portions 36 and 37.

In Figure 7, the double dotted broken line LG shows an outline of the leg of a rider who is riding upon the scooter type vehicle 1 according to this embodiment of the present invention. The abovementioned front or frontmost end portion 361 of the left footrest portion 36 and the abovementioned front or frontmost end portion 371 of the right footrest portion 37 are limit positions for the rider when he pushes his feet forward. Accordingly, as shown in Figure 7, it is possible for the rider to position his feet at positions that, when viewed from the side of the vehicle, overlap with a portion of the fuel supply pipe 40 and with a portion of the down frame 12. The rider is able to place his toes forward of the rear edge of the lower end portion of the fuel supply pipe 40. Moreover, the rider is able to place his toes forward of the front edge of the lower end portion of the fuel supply pipe 40. Yet further, since the front or frontmost end portions 361 and 371 of the left and right footrest portions 36 and 37 are formed as curved surfaces, accordingly it is easy for the rider to put his toes there.

Moreover, in this embodiment, the down frame 12 is disposed to the right side of the center line C1 of the vehicle, and the connection pipe 52 is positioned to the left side thereof. In other words, the down frame 12 and the connection pipe 52 are disposed generally symmetrically to the left and the right of the center line C1 of the vehicle. Due to this, along with the widths of the left and right footrest portions 36 and 37 being made equal, it is also possible to increase the width of the left and right footrest portions 36 and 37, while still restraining increase in the size of the flat footboard 34 in the transverse direction of the vehicle.

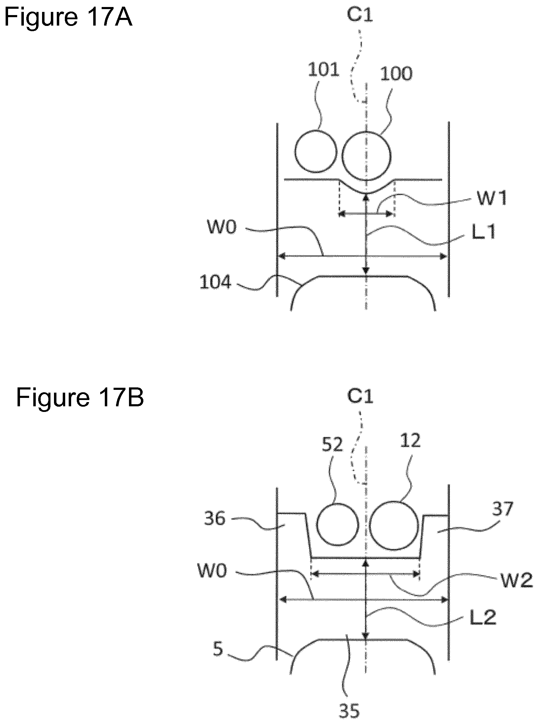

Next, the distinguishing features of the scooter type vehicle 1 according to this embodiment will be explained with reference to Figure 17A and 17B. Figure 17A is a schematic figure showing the structure of a scooter type vehicle according to a comparison example. Figure 17B is a schematic figure showing the structure of the scooter type vehicle 1 according to this embodiment.

As shown in Figure 17B, with the scooter type vehicle 1 according to this embodiment, it is possible to increase the widths of the left and right footrest portions 36 and 37, while still keeping the dimension W0 of the flat footboard 34 in the transverse direction of the vehicle the same.

On the other hand, with the scooter type vehicle according to the comparison example, as shown in Figure 17A, the center of the down frame 100 is disposed over the center line C1 of the vehicle. The connection pipe 101 is disposed at the lateral side of the down frame 100. According to this structure, it is possible to elongate the flat footboard 103, which is positioned in front of the seat 104, up to a position at the rear of the down frame 100. Due to this, it is possible to extend the length of the central portion of the flat footboard 103 in the longitudinal direction (refer to L1).

By contrast, with the scooter type vehicle 1 according to this embodiment, as shown in Figure 17B, the width W35 of the central portion 35 becomes greater than the width W1 of the central portion of the prior art scooter type vehicle described above. In other words, since the central portion 35 which is shorter longitudinally than the left and right footrest portions 36 and 37 becomes wider transversely, accordingly, due to this, there is a concern of reduction of rider comfort.

However, the inventors of the present invention have become aware that, even if the width W35 of the central portion 35 of the flat footboard 34 is great, the influence that this exerts upon rider comfort is relatively small, and that lengthening the left and right footrest portions in the longitudinal direction contributes much more to the enhancement of rider comfort.

In other words, the central portion 35 of the flat footboard 34 is mainly used for one leg to pass over when the rider is getting on to the vehicle or getting off from it. Due to this, it will be sufficient if the dimension L2 of this central portion 35 in the longitudinal direction is large enough to allow the leg of the rider to pass.

By contrast, during driving, the frequency with which the rider places his feet upon the left and right footrest portions 36 and 37 is much higher than the frequency with which he places them upon the central portion 35. Accordingly, even if the width W35 of the central portion 35 is great, the influence that this exerts upon the comfort of the rider during driving is small. Moreover, it is normal for the rider to drive the scooter in a posture in which his knees are pointing forward and are bent. With this type of posture, the comfort level is enhanced by easing fore and aft pivoting of the rider's legs (from his knees down) around his knees as fulcrums. Accordingly it will be understood that, by elongating the left and right footrest portions 36 and 37 in the longitudinal direction, it becomes possible to greatly enhance the level of comfort for the rider, even if the width W35 of the central portion 35 is great.

Due to the above, with the vehicle according to this embodiment, it is possible to lengthen the dimensions in the direction longitudinal to the vehicle of the left and right footrest portions 36 and 37 of the flat footboard 34, while still restraining increase in the size of the flat footboard 34 in the transverse direction of the vehicle, so that it is thereby possible to enhance the level of comfort for the rider.

Moreover, the connection pipe 52, the fuel pipe 43, and the fuel supply pipe 40 are disposed on the same side with respect to the center line C2 of the vehicle that extends in the vertical direction when viewed from the front of the vehicle. Due to this, it is possible to shorten the length of the fuel pipe 43, and accordingly it is possible to perform routing of the fuel pipe 43 more simply and easily.

At least a portion of the left footrest portion 36 and at least a portion of the right footrest portion 37 are positioned forwardly the front edge of the lower end portion of the connection pipe 52. Due to this, the left and right footrest portions 36 and 37 can be extended forward without any limitation due to the connection pipe 52 and the down frame 12. Accordingly, it is possible to extend the left and right footrest portions 36 and 37 of the flat footboard 34 toward the front, while still restraining increase in the size of the flat footboard 34 in the transverse direction of the vehicle, so that it is thereby possible to enhance the level of comfort for the rider.

The center line C2 of this scooter type vehicle 1 in the transverse direction of the vehicle is positioned between the inner end of the lower end portion 121 of the down frame 12 in the transverse direction of the vehicle and the inner end of the connection pipe 52 in the transverse direction of the vehicle. Due to this, the lower end portion 121 of the down frame 12 and the connection pipe 52 are disposed as separated to the left and to the right with respect to the center line C2 of the vehicle. Due to this, it is easy to widen the two left and right footrest portions 36 and 37 equally in the transverse direction of the vehicle, while still restraining increase in the size of the flat footboard 34 in the transverse direction of the vehicle.

The diameter of the down frame 12 is greater than the diameter of the connection pipe 52. Moreover, the distance from the inner edge of the lower portion of the down frame 12 in the transverse direction of the vehicle to the center line C2 of the vehicle in the transverse direction of the vehicle is smaller than the distance from the inner edge of the connection pipe 52 in the transverse direction of the vehicle to the center line C2 of the vehicle in the transverse direction of the vehicle. Due to this, by disposing the down frame 12 that has a relatively large diameter in a position that is closer to the center line C2 of the vehicle in the transverse direction of the vehicle, it is easy to widen the left and right footrest portions 36 and 37 equally to the left and to the right, while still keeping the width dimension of the flat footboard 34 compact.

The dimension W36 of the left footrest portion 36 in the transverse direction of the vehicle is smaller than the dimension W35 of the central portion 35 in the transverse direction of the vehicle. The dimension W37 of the right footrest portion 37 in the transverse direction of the vehicle is smaller than the dimension W35 of the central portion 35 in the transverse direction of the vehicle. Moreover, the sum of the dimension W36 of the left footrest portion 36 in the transverse direction of the vehicle and the dimension W37 of the right footrest portion 37 in the transverse direction of the vehicle is smaller than the dimension W35 of the central portion 35 in the transverse direction of the vehicle. Due to this, it is possible to make the entire flat footboard 34 more compact in the transverse direction of the vehicle, while still extending the left and right footrest portions 36 and 37 toward the front and thus making it possible to enhance comfort for the rider.

As seen from the side of the vehicle, the front end portion of the tank main body 51 overlaps the lower portion of the down frame 21. When viewed in a plan view of the vehicle, the front end portion of the tank main body 51 is disposed between the lower portion of the down frame 12 and the left footrest portion 36. Due to this, the fuel tank 8 is arranged so as to utilize the space that is provided by the down frame 12 being disposed off-center in the transverse direction of the vehicle. Accordingly, even though the fuel tank 8 is disposed between the left footrest portion 36 and the down frame 12 when viewed in a plan view of the vehicle, it is still possible to enhance the level of comfort for the rider while ensuring compactness of the flat footboard 34 in the transverse direction of the vehicle. Moreover, by elongating the fuel tank 8 towards the front of the vehicle, it is possible to prevent the height of the fuel tank 8 from becoming too great, while still ensuring sufficient capacity for the fuel tank 8. Due to this, while preventing the fuel tank 8 from getting too close to the surface of the ground, it is still possible to ensure a wide space for the rider by lowering the height of the flat footboard 34.

As seen in a plan view of the vehicle, the left footrest portion 36 overlaps the second lower frame portion 13b. Due to this, it is possible to ensure the rigidity with which the left footrest portion 36 is supported, so that it is possible to ensure the length of the left footrest portion 36. Moreover, due to the fact that the gap between the first lower frame portion 13a and the second lower frame portion 13b becomes large, it is possible to increase the dimension of the fuel tank 8 in the transverse direction of the vehicle, the fuel tank 8 being positioned between the lower frame portions 13A,13B. Due to this, it is possible to keep the height dimension of the fuel tank 8 low, while still ensuring a good capacity for the fuel tank 8. This means that it is possible to ensure a sufficiently large space for the rider, while still guaranteeing an appropriate distance between the fuel tank 8 and the surface of the ground.

The tank main body 51, the connection pipe 52, and the second lower frame portion 13b are arranged in sequence in the vertical direction by utilizing the space that is ensured by the down frame 12 being arranged as offset in the transverse direction of the vehicle. Due to this, even though the left footrest portion 36 is disposed on the outer lateral side of the tank main body 51, the connection pipe 52, and the second lower frame portion 13b as seen in a plan view of the vehicle, it is still possible to suppress increase in size of the flat footboard 34 in the transverse direction of the vehicle, so that it is possible to enhance the level of comfort for the driver.

It should be understood that, when the main body 51, the connection pipe 52, and the second lower frame portion 13b are thus arranged in sequence in the vertical direction, there is a concern that the dimension of the stack in the vertical direction may become excessively great. However, it is possible to keep down the height of the fuel tank 8 by extending the fuel tank 8 forward, while still ensuring a sufficiently great capacity for the fuel tank 8. Due to this, it is possible to ensure an ample space for the rider by lowering the height of the flat footboard 34, while still preventing the fuel tank 8 from becoming too close to the surface of the ground.

Yet further, it is possible to protect the connection pipe 52 from underneath with the second lower frame portion 13b. Moreover, since it is not necessary to detour the fuel pipe 43 from underneath the second lower frame portion 13b around the front of the second lower frame portion 13b and to extend it upward, working with the fuel pipe 43 becomes simple and easy.

While an embodiment of the present invention has been explained above, the present invention is not to be considered as being limited to this embodiment, and it would be possible to implement various changes to the present invention without departing from its scope.

The scooter type vehicle according to the present invention is not limited to having two wheels; it could also include three or more wheels. For example, it could include two front wheels and one rear wheel.

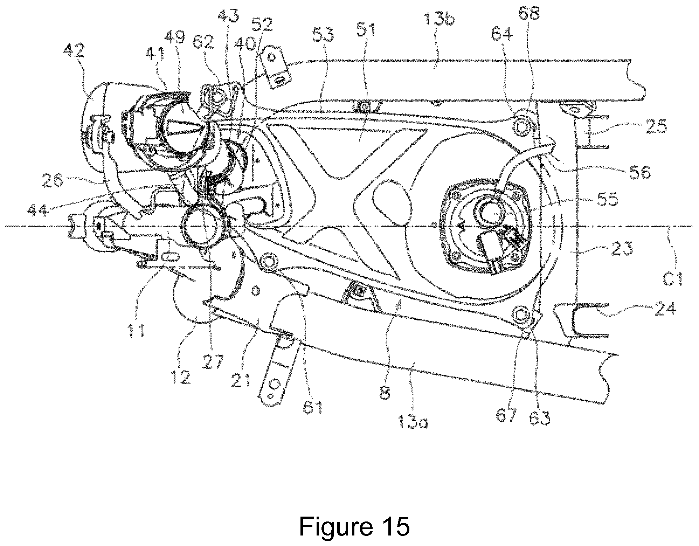

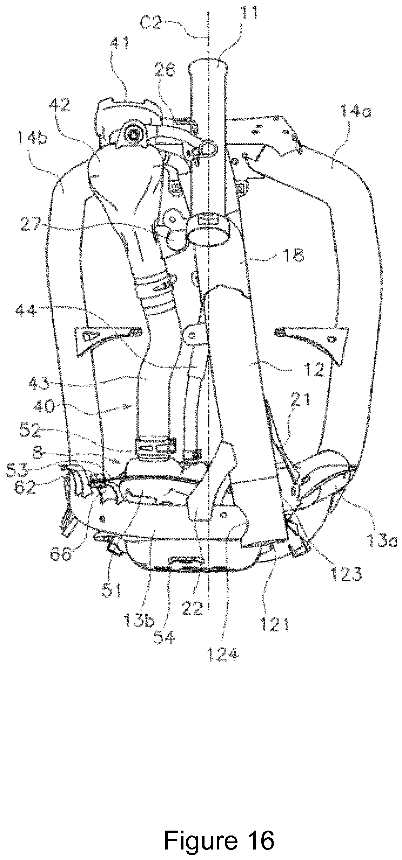

It would also be possible to arrange the down frame 12 and the fuel supply pipe in the opposite left/right configuration to that of the embodiment described above. In other words, as shown in Figure 15 and Figure 16, in the case of the down frame 12, when viewed in a plan view of the vehicle, it would be acceptable for the down frame 12 to extend from the head pipe 11 on the left side, so that at least a portion of the lower end portion 121 of the down frame 12 is disposed to the left side with respect to the center line C1. Moreover, when viewed in a plan view of the vehicle, it would be acceptable for at least a portion of the fuel supply pipe 4 to be disposed to the right side with respect to the center line C1. In this case, it would be desirable for the shape of the fuel tank 8 and the shape of the vehicle body frame 2 also to have an opposite left/right to the structure of the embodiment described above.

It would also be acceptable for only a portion of the lower end portion 121 of the down frame 12 to be disposed to the right side or to the left side with respect to the center line C1. In other words, it would be possible for the lower end portion 121 of the down frame 12 to overlap the center line C1. Moreover, it would also be possible for only a portion of the fuel supply pipe 40 to be disposed to the right side or to the left side with respect to the center line C1. In other words, it would be possible for a portion of the fuel supply pipe 40 to overlap the center line C1.

As seen in a plan view of the vehicle, it would also be possible for the entire connection portion between the fuel supply pipe 40 and the tank main body 51 to overlap the second lower frame portion 13b. When viewed in a plan view of the vehicle, the connection pipe 52 could also overlap the flange portion 53. Moreover, it would also be acceptable to arrange for the boundary between the tank main body 51 and the flange portion 53 to include a portion that is concave toward the tank main body 51.

It would also be acceptable to arrange for the entire left footrest portion 36 and the entire right footrest portion 37 to be positioned forward the rear end of the lower end portion 121 of the down frame 12. It would also be possible for the distance in the transverse direction of the vehicle between the lower end portion 121 of the down frame 12 and the fuel supply pipe 40 to be greater than or equal to the width of the down frame 12 in the transverse direction of the vehicle. The sub-tank 42 could also be omitted. In other words, it would be vehicle 1 comprises a vehicle body frame 2, a vehicle body cover 3, a front possible for the fuel pipe 43 to be directly connected to the fuel supply portion 41. It would also be possible to omit both the fuel pipe 43 and also the sub-tank 42. In other words, it would be possible to connect the connection pipe 52 to the fuel supply portion 41. It would also be acceptable to arrange for the entire footrest portion 36 and the entire right footrest portion 37 to be positioned forward the front edge of the lower end portion of the fuel supply pipe 40.

The vocabulary and the expressions employed in this specification have only been employed for the purposes of explanation, and are not to be interpreted as being restrictive in any way. Moreover, there is no question of exclusion of any elements that may be considered as being equivalent to specific items shown or described herein; any variations that may be considered as falling within the scope of the claims of the present application are to be recognized as being acceptable. The present invention is one that can be implemented in many different formats. The disclosure of this application is to be considered as being sufficient for providing embodiments of the principle of the present invention. Those embodiments have been described herein on the basis of the understanding that there is no intention for the present invention to be limited by the preferred embodiments thereof as described herein and/or as shown in the figures of this application. Thus, the present invention is not to be considered as being limited to the embodiments described in this specification. Moreover, the present invention is also to be considered as covering any embodiment that incorporates equivalent elements, or corrections, deletions, combinations, improvements, and/or variations to the content of the present disclosure that could be conceived by a person skilled in the relevant art. The limitations of the claims of this application are to be widely interpreted on the basis of the terms employed in those claims; and the present invention is not to be considered as being in any way limited to the embodiments that have been described in the present specification, or that are described during the prosecution of the present application.

## Claims

1. A scooter type vehicle (1), the scooter type vehicle comprising:
a head pipe (11);
a down frame (12; 100) extending downward from the head pipe;
a lower frame (13) extending rearward from the down frame;
a seat frame (14) extending rearward and upward from the lower frame;
a seat (5) disposed rearward of the head pipe and supported upon the seat frame;
a flat footboard (34; 103) for placing a rider's feet upon, the flat footboard being disposed below and forward the seat, and over the lower frame;
a fuel tank (8) disposed under the flat footboard;
a fuel supply pipe (40) projecting upward from the fuel tank; and
a front wheel (4) disposed in front of a lower end portion (121) of the down frame, in front of the fuel pipe (43) and in front of the fuel tank when viewed from a side of the scooter type vehicle;
wherein when viewed from the side of the scooter type vehicle, at least a portion of a lower end portion of the fuel supply pipe overlaps the down frame,
when viewed in a plan view of the scooter type vehicle, a center line (C1) of the scooter type vehicle extends in the longitudinal direction of the scooter type vehicle through the head pipe,
and,
the flat footboard includes:
a central portion (35) disposed behind the lower end portion of the down frame and the fuel supply pipe;
a left footrest portion (36) disposed forward of the central portion, and to the left side of the fuel supply pipe and the lower end portion of the down frame; and
a right footrest portion (37) disposed forward of the central portion, and to the right side of the fuel supply pipe and the lower end portion of the down frame,
**characterized in that** the down frame extends toward a side from the head pipe so that, when viewed in a plan view of the scooter type vehicle, at least a portion of the lower end portion of the down frame is disposed to the side with respect to the center line, and **in that**,
when viewed in a plan view of the scooter type vehicle, at least a portion of the fuel supply pipe is disposed on an other or opposite side of the center line to the side of the center line to which the down frame extends.

2. The scooter type vehicle of claim 1, wherein the side is either the left side or the right side and the other or opposite side is the other of the right side or the left side, such that the down frame either extends toward a left side from the head pipe so that, when viewed in a plan view of the scooter type vehicle, at least a portion of the lower end portion of the down frame is disposed to the left side with respect to the center line; or the down frame extends toward the right side from the head pipe so that, when viewed in a plan view of the scooter type vehicle, at least a portion of the lower end portion of the down frame is disposed on the right side with respect to the center line; and
if the down frame extends to the right side then, in a plan view of the scooter type vehicle, at least a portion of the fuel supply pipe is disposed on the left side with respect to the center line, or if the down frame extends to the left side, then, when viewed in a plan view of the scooter type vehicle, at least a portion of the fuel supply pipe is disposed on the right side with respect to the center line.

3. A scooter type vehicle according to any preceding claim, wherein at least a portion of the left footrest portion and at least a portion of the right footrest portion are positioned forward of a rear end of the lower end portion of the down frame and a rear end of the lower end portion of the fuel supply pipe.

4. A scooter type vehicle according to any of Claims 1 to 3, wherein at least a portion of the left footrest portion and at least a portion of the right footrest portion (72) are positioned forward of a front edge of the lower end portion of the fuel supply pipe.

5. A scooter type vehicle according to any preceding claim, wherein the center line (C1; C2) of the scooter type vehicle in the transverse direction of the scooter type vehicle is positioned between an inner edge in the transverse direction of the scooter type vehicle of the lower end portion of the down frame, and an inner edge in the transverse direction of the scooter type vehicle of the lower end portion of the fuel supply pipe.

6. A scooter type vehicle according to any preceding claim, wherein a diameter of the down frame is greater than a diameter of the fuel supply pipe, and
in a horizontal plane or surface that includes the lower end portion of the fuel supply pipe, a distance from the inner edge in the transverse direction of the scooter type vehicle of the down frame to the center line of the scooter type vehicle in the transverse direction of the scooter type vehicle is smaller than a distance from the inner edge in the transverse direction of the scooter type vehicle of the lower end portion of the fuel supply pipe to the center line of the scooter type vehicle in the transverse direction of the scooter type vehicle.

7. A scooter type vehicle according to any preceding claim, wherein the fuel supply pipe includes a connection pipe (52) projecting upward from the tank main body (51),
when viewed from the side of the scooter type vehicle, a center in the longitudinal direction of the scooter type vehicle of an upper end of the connection pipe overlaps the down frame; and
along a phantom line extending in the transverse direction of the scooter type vehicle and passing through the center in the longitudinal direction of the scooter type vehicle of the upper end of the connection pipe when viewed in a plan view of the scooter type vehicle:
a dimension in the transverse direction of the scooter type vehicle of the left footrest portion is smaller than a dimension in the transverse direction of the scooter type vehicle of the central portion,
a dimension in the transverse direction of the scooter type vehicle of the right footrest portion is smaller than the dimension in the transverse direction of the scooter type vehicle of the central portion, and
the sum of the dimension in the transverse direction of the scooter type vehicle of the left footrest portion and the dimension in the transverse direction of the scooter type vehicle of the right footrest portion is smaller than the dimension in the transverse direction of the scooter type vehicle of the central portion.

8. A scooter type vehicle according to any preceding claim, wherein a distance between the down frame and the fuel supply pipe in the transverse direction of the scooter type vehicle is smaller than a width of the down frame in the transverse direction of the scooter type vehicle.

9. A scooter type vehicle according to any preceding claim, wherein when viewed from the side of the scooter type vehicle, a front or frontmost portion of the fuel tank overlaps a lower portion of the down frame , and
when viewed in a plan view of the scooter type vehicle, the front or frontmost portion of the fuel tank is disposed between the lower portion of the down frame and one of the left footrest portion and the right footrest portion.

10. A scooter type vehicle according to any preceding claim, wherein the lower frame includes:
a first lower frame portion (13a) connected to the lower end portion of the down frame, the first lower frame portion being disposed on a same side with respect to the center line of the scooter type vehicle as the direction in which the down frame extends when viewed in a plan view of the scooter type vehicle; and
a second lower frame portion (13b) connected to the lower end portion of the down frame, the second lower frame portion being disposed on an opposite side with respect to the center line of the scooter type vehicle to the direction in which the down frame extends when viewed in a plan view of the scooter type vehicle;
when viewed in a plan view of the scooter type vehicle, at least a portion of the fuel tank is disposed between the first lower frame portion and the second lower frame portion,
when viewed in a plan view of the scooter type vehicle, the second lower frame portion extends to cross the center line of the scooter type vehicle from the side where the lower end portion of the down frame is disposed,
when viewed in a plan view of the scooter type vehicle, one of the left footrest portion and the right footrest portion overlaps a portion of the second lower frame portion, and
when viewed in a plan view of the scooter type vehicle, a distance from the center line of the scooter type vehicle to an outer edge of the second lower frame portion is greater than a distance from the center line of the scooter type vehicle to an outer edge of the first lower frame portion.

11. A scooter type vehicle according to claim 10, wherein a front or frontmost portion of the fuel tank is disposed over the second lower frame portion,
when viewed in a plan view of the scooter type vehicle, the front or frontmost portion of the fuel tank overlaps the second lower frame portion, and
when viewed in a plan view of the scooter type vehicle, one of the left footrest portion and the right footrest portion is disposed to an outer lateral side of a portion where the front portion of the fuel tank and the second lower frame portion overlap.

12. A scooter type vehicle according to claims 10 or 11, wherein at least a portion of a connection portion (124) between the fuel supply pipe and the fuel tank is disposed over the second lower frame portion, and, in a plan view of the scooter type vehicle, overlaps the second lower frame portion, and
when viewed in a plan view of the scooter type vehicle, one of the left footrest portion and the right footrest portion is disposed to the outer lateral side of a portion where the second lower frame portion and at least a portion of the connection portion between the fuel supply pipe and the fuel tank overlap.

13. A scooter type vehicle according to any one of claims 10 through 12, wherein the fuel tank includes:
a tank main body; and
a flange portion projecting from the tank main body in a horizontal direction;
at least a portion of the flange portion is disposed over the second lower frame portion, and overlaps the second lower frame portion when viewed in a plan view of the scooter type vehicle, and
when viewed in a plan view of the scooter type vehicle, one of the left footrest portion and the right footrest portion is disposed outer lateral side of a portion where the flange portion and the second lower frame portion are overlapped.

14. A scooter type vehicle according to claim 13, wherein the fuel supply pipe includes a connection pipe projecting upward from the tank main body, and
when viewed in a plan view of the scooter type vehicle, the connection pipe does not overlap the flange portion; and optionally:
when viewed in a plan view of the scooter type vehicle, the flange portion surrounds a periphery of the tank main body; and
a boundary between the tank main body and the flange portion includes no portion that is concave toward the tank main body.

15. A scooter type vehicle according to any preceding claim, wherein the down frame includes a lower down frame portion (120) including a lower end portion of the down frame, the lower down frame portion being disposed at a first lateral side with respect to the center line of the scooter type vehicle that extends in the vertical direction when viewed from the front of the scooter type vehicle,
when viewed from the front of the scooter type vehicle, the fuel supply pipe is disposed at a second lateral side with respect to the center line of the scooter type vehicle that extends in the vertical direction; and
when viewed from the front of the scooter type vehicle, the center line of the scooter type vehicle that extends in the vertical direction is positioned between the lower down frame portion and the fuel supply pipe.

## Patentansprüche

1. Rollerartiges Fahrzeug (1), wobei das rollerartige Fahrzeug Folgendes umfasst:
ein Steuerrohr (11),
einen Abwärtsrahmen (12; 100), der sich von dem Steuerrohr nach unten erstreckt,
einen unteren Rahmen (13), der sich von dem Abwärtsrahmen nach hinten erstreckt,
einen Sitzrahmen (14), der sich von dem unteren Rahmen nach hinten und nach oben erstreckt,
einen Sitz (5) der hinter dem Steuerrohr angeordnet ist und auf dem Sitzrahmen getragen wird,
ein flaches Trittbrett (34; 103) zum Platzieren der Füße eines Fahrers auf demselben, wobei das flache Trittbrett unter und vor dem Sitz und über dem unteren Rahmen angeordnet ist,
einen Kraftstofftank (8), der unter dem flachen Trittbrett angeordnet ist,
ein Kraftstoff-Zufuhrrohr (40), das von dem Kraftstofftank nach oben vorspringt, und
ein Vorderrad (4), das, wenn von einer Seite des rollerartigen Fahrzeugs aus betrachtet, vor einem unteren Endabschnitt (121) des Abwärtsrahmens, vor dem Kraftstoff-Zufuhrrohr (43) und vor dem Kraftstofftank angeordnet ist,
wobei, wenn von der Seite des rollerartigen Fahrzeugs aus betrachtet, wenigstens ein Abschnitt eines unteren Endabschnitts des Kraftstoff-Zufuhrrohres den Abwärtsrahmen überlappt,
wenn in einer Draufsicht des rollerartigen Fahrzeugs betrachtet, sich eine Mittellinie (C1) des rollerartigen Fahrzeugs in der Längsrichtung des rollerartigen Fahrzeugs durch das Steuerrohr erstreckt
und
das flache Trittbrett Folgendes einschließt:
einen Mittelabschnitt (35), der hinter dem unteren Endabschnitt des Abwärtsrahmens und dem Kraftstoff-Zufuhrrohr angeordnet ist,
einen linken Trittbrettabschnitt (36), der vor dem Mittelabschnitt und zur linken Seite des Kraftstoffzufuhrrohres und des unteren Endabschnitts des Abwärtsrahmens angeordnet ist, und
einen rechten Trittbrettabschnitt (37), der vor dem Mittelabschnitt und zur rechten Seite des Kraftstoffzufuhrrohres und des unteren Endabschnitts des Abwärtsrahmens angeordnet ist,
**dadurch gekennzeichnet, dass** sich der Abwärtsrahmen von dem Steuerrohr zu einer Seite hin erstreckt, so dass, wenn in einer Draufsicht des rollerartigen Fahrzeugs betrachtet, wenigstens ein Abschnitt des unteren Endabschnitts des Abwärtsrahmens zu der Seite in Bezug auf die Mittellinie angeordnet ist, und dadurch, dass,
wenn in einer Draufsicht des rollerartigen Fahrzeugs betrachtet, wenigstens ein Abschnitt des Kraftstoff-Zufuhrrohres auf einer anderen oder zu der Seite der Mittellinie, zu der sich der Abwärtsrahmen erstreckt, entgegengesetzten Seite der Mittellinie angeordnet ist.

2. Rollerartiges Fahrzeug nach Anspruch 1, wobei die Seite entweder die linke Seite oder die rechte Seite ist und die andere oder entgegengesetzte Seite die andere von der rechten Seite oder der linken Seite ist, derart, dass sich der Abwärtsrahmen zu einer linken Seite von dem Steuerrohr hin erstreckt, so dass, wenn in einer Draufsicht des rollerartigen Fahrzeugs betrachtet, wenigstens ein Abschnitt des unteren Endabschnitts des Abwärtsrahmens zu der linken Seite in Bezug auf die Mittellinie angeordnet ist, oder sich der Abwärtsrahmen zu der rechten Seite von dem Steuerrohr hin erstreckt, so dass, wenn in einer Draufsicht des rollerartigen Fahrzeugs betrachtet, wenigstens ein Abschnitt des unteren Endabschnitts des Abwärtsrahmens auf der rechten Seite in Bezug auf die Mittellinie angeordnet ist, und,
falls sich der Abwärtsrahmen zu der rechten Seite erstreckt, dann, in einer Draufsicht des rollerartigen Fahrzeugs, wenigstens ein Abschnitt des Kraftstoff-Zufuhrrohres auf der linken Seite in Bezug auf die Mittellinie angeordnet ist, oder, falls sich der Abwärtsrahmen zu der linken Seite erstreckt, dann, wenn in einer Draufsicht des rollerartigen Fahrzeugs betrachtet, wenigstens ein Abschnitt des Kraftstoff-Zufuhrrohres auf der rechten Seite in Bezug auf die Mittellinie angeordnet ist.

3. Rollerartiges Fahrzeug nach einem der vorhergehenden Ansprüche, wobei wenigstens ein Abschnitt des linken Trittbrettabschnitts und wenigstens ein Abschnitt des rechten Trittbrettabschnitts nach vorn von einem hinteren Ende des unteren Endabschnitts des Abwärtsrahmens und einem hinteren Ende des unteren Endabschnitts des Kraftstoff-Zufuhrrohres angeordnet sind.

4. Rollerartiges Fahrzeug nach einem der Ansprüche 1 bis 3, wobei wenigstens ein Abschnitt des linken Trittbrettabschnitts und wenigstens ein Abschnitt des rechten Trittbrettabschnitts (72) vor einer Vorderkante des unteren Endabschnitts des Kraftstoff-Zufuhrrohres angeordnet sind.

5. Rollerartiges Fahrzeug nach einem der vorhergehenden Ansprüche, wobei die Mittellinie (C1; C2) des rollerartigen Fahrzeugs in der Querrichtung des rollerartigen Fahrzeugs zwischen einer in der Querrichtung des rollerartigen Fahrzeugs inneren Kante des unteren Endabschnitts des Abwärtsrahmens und einer in der Querrichtung des rollerartigen Fahrzeugs inneren Kante des unteren Endabschnitts des Kraftstoff-Zufuhrrohres angeordnet ist.

6. Rollerartiges Fahrzeug nach einem der vorhergehenden Ansprüche, wobei ein Durchmesser des Abwärtsrahmens größer ist als ein Durchmesser des Kraftstoff-Zufuhrrohres und
in einer horizontalen Ebene oder Fläche, die den unteren Endabschnitt des Kraftstoff-Zufuhrrohres einschließt, eine Entfernung von der in der Querrichtung des rollerartigen Fahrzeugs inneren Kante des Abwärtsrahmens zu der Mittellinie des rollerartigen Fahrzeugs in der Querrichtung des rollerartigen Fahrzeugs kleiner ist als eine Entfernung von der in der Querrichtung des rollerartigen Fahrzeugs inneren Kante des Kraftstoff-Zufuhrrohres zu der Mittellinie des rollerartigen Fahrzeugs in der Querrichtung des rollerartigen Fahrzeugs.

7. Rollerartiges Fahrzeug nach einem der vorhergehenden Ansprüche, wobei das Kraftstoff-Zufuhrrohr ein Verbindungsrohr (52) einschließt, das von dem Tankhauptkörper (51) nach oben vorspringt,
wobei, wenn von der Seite des rollerartigen Fahrzeugs aus betrachtet, eine Mitte in der Längsrichtung des rollerartigen Fahrzeugs eines oberen Endes des Verbindungsrohres den Abwärtsrahmen überlappt und
entlang einer Phantomlinie, die sich in der Querrichtung des rollerartigen Fahrzeugs erstreckt und, wenn in einer Draufsicht des rollerartigen Fahrzeugs betrachtet, durch die Mitte in der Längsrichtung des rollerartigen Fahrzeugs des oberen Endes des Verbindungsrohres hindurchgeht:
eine Abmessung des linken Trittbrettabschnitts in der Querrichtung des rollerartigen Fahrzeugs kleiner ist als eine Abmessung des Mittelabschnitts in der Querrichtung des rollerartigen Fahrzeugs,
eine Abmessung des rechten Trittbrettabschnitts in der Querrichtung des rollerartigen Fahrzeugs kleiner ist als eine Abmessung des Mittelabschnitts in der Querrichtung des rollerartigen Fahrzeugs und
die Summe der Abmessung des linken Trittbrettabschnitts in der Querrichtung des rollerartigen Fahrzeugs und der Abmessung des rechten Trittbrettabschnitts in der Querrichtung des rollerartigen Fahrzeugs kleiner ist als eine Abmessung des Mittelabschnitts in der Querrichtung des rollerartigen Fahrzeugs.

8. Rollerartiges Fahrzeug nach einem der vorhergehenden Ansprüche, wobei eine Entfernung zwischen dem Abwärtsrahmen und dem Kraftstoff-Zufuhrrohr in der Querrichtung des rollerartigen Fahrzeugs kleiner ist als eine Breite des Abwärtsrahmens in der Querrichtung des rollerartigen Fahrzeugs.

9. Rollerartiges Fahrzeug nach einem der vorhergehenden Ansprüche, wobei, wenn von der Seite des rollerartigen Fahrzeugs aus betrachtet, ein vorderer oder vorderster Abschnitt des Kraftstofftanks einen unteren Abschnitt des Abwärtsrahmens überlappt und,
wenn in einer Draufsicht des rollerartigen Fahrzeugs betrachtet, der vordere oder vorderste Abschnitt des Kraftstofftanks zwischen dem unteren Abschnitt des Abwärtsrahmens und einem von dem linken Trittbrettabschnitt und dem rechten Trittbrettabschnitt angeordnet ist.

10. Rollerartiges Fahrzeug nach einem der vorhergehenden Ansprüche, wobei der untere Rahmen Folgendes einschließt:
einen ersten unteren Rahmenabschnitt (13a), der mit dem unteren Endabschnitt des Abwärtsrahmens verbunden ist, wobei der erste untere Rahmenabschnitt, wenn in einer Draufsicht des rollerartigen Fahrzeugs betrachtet, auf der gleichen Seite in Bezug auf die Mittellinie des rollerartigen Fahrzeugs angeordnet ist wie die Richtung, in der sich der Abwärtsrahmen erstreckt, und
einen zweiten unteren Rahmenabschnitt (13b), der mit dem unteren Endabschnitt des Abwärtsrahmens verbunden ist, wobei der zweite untere Rahmenabschnitt, wenn in einer Draufsicht des rollerartigen Fahrzeugs betrachtet, auf einer entgegengesetzten Seite in Bezug auf die Mittellinie des rollerartigen Fahrzeugs angeordnet ist zu der Richtung, in der sich der Abwärtsrahmen erstreckt,
wobei, wenn in einer Draufsicht des rollerartigen Fahrzeugs betrachtet, wenigstens ein Abschnitt des Kraftstofftanks zwischen dem ersten unteren Rahmenabschnitt und dem zweiten unteren Rahmenabschnitt angeordnet ist,
wenn in einer Draufsicht des rollerartigen Fahrzeugs betrachtet, sich der zweite untere Rahmenabschnitt so erstreckt, dass er die Mittellinie des rollerartigen Fahrzeugs von der Seite kreuzt, wo der untere Endabschnitt des Abwärtsrahmens angeordnet ist,
wenn in einer Draufsicht des rollerartigen Fahrzeugs betrachtet, einer von dem linken Trittbrettabschnitt und dem rechten Trittbrettabschnitt einen Abschnitt des zweiten unteren Rahmenabschnitts überlappt und,
wenn in einer Draufsicht des rollerartigen Fahrzeugs betrachtet, eine Entfernung von der Mittellinie des rollerartigen Fahrzeugs zu einer äußeren Kante des zweiten unteren Rahmenabschnitts größer ist als eine Entfernung von der Mittellinie des rollerartigen Fahrzeugs zu einer äußeren Kante des ersten unteren Rahmenabschnitts.

11. Rollerartiges Fahrzeug nach Anspruch 10, wobei ein vorderer oder vorderster Abschnitt des Kraftstofftanks über dem zweiten unteren Rahmenabschnitt angeordnet ist,
wenn in einer Draufsicht des rollerartigen Fahrzeugs betrachtet, der vordere oder vorderste Abschnitt des Kraftstofftanks den zweiten unteren Rahmenabschnitt überlappt und,
wenn in einer Draufsicht des rollerartigen Fahrzeugs betrachtet, einer von dem linken Trittbrettabschnitt und dem rechten Trittbrettabschnitt zu einer äußeren seitlichen Seite eines Abschnitts angeordnet ist, wo der vordere Abschnitt des Kraftstofftanks und der zweite untere Rahmenabschnitt überlappen.

12. Rollerartiges Fahrzeug nach Anspruch 10 oder 11, wobei wenigstens ein Abschnitt eines Verbindungsabschnitts (124) zwischen dem Kraftstoff-Zufuhrrohr und dem Kraftstofftank über dem zweiten unteren Rahmenabschnitt angeordnet ist und, in einer Draufsicht des rollerartigen Fahrzeugs, den zweiten unteren Rahmenabschnitt überlappt und,
wenn in einer Draufsicht des rollerartigen Fahrzeugs betrachtet, einer von dem linken Trittbrettabschnitt und dem rechten Trittbrettabschnitt zu einer äußeren seitlichen Seite eines Abschnitts angeordnet ist, wo der zweite untere Rahmenabschnitt und wenigstens ein Abschnitt des Verbindungsabschnitts zwischen dem Kraftstoff-Zufuhrrohr und dem Kraftstofftank überlappen.

13. Rollerartiges Fahrzeug nach einem der Ansprüche 10 bis 12, wobei der Kraftstofftank Folgendes einschließt:
einen Tankhauptkörper und
einen Flanschabschnitt, der in einer horizontalen Richtung von dem Tankhauptkörper vorspringt,
wobei wenigstens ein Abschnitt des Flanschabschnitts über dem zweiten unteren Rahmenabschnitt angeordnet ist und, wenn in einer Draufsicht des rollerartigen Fahrzeugs betrachtet, den zweiten unteren Rahmenabschnitt überlappt und,
wenn in einer Draufsicht des rollerartigen Fahrzeugs betrachtet, einer von dem linken Trittbrettabschnitt und dem rechten Trittbrettabschnitt zu einer äußeren seitlichen Seite eines Abschnitts angeordnet ist, wo der Flanschabschnitt und zweite untere Rahmenabschnitt überlappt sind.

14. Rollerartiges Fahrzeug nach Anspruch 13, wobei das Kraftstoff-Zufuhrrohr ein Verbindungsrohr einschließt, das von dem Tankhauptkörper nach oben vorspringt, und,
wenn in einer Draufsicht des rollerartigen Fahrzeugs betrachtet, das Verbindungsrohr den Flanschabschnitt nicht überlappt und wahlweise:
wenn in einer Draufsicht des rollerartigen Fahrzeugs betrachtet, der Flanschabschnitt einen Umfang des Tankhauptkörpers umgibt und
eine Grenze zwischen dem Tankhauptkörper und dem Flanschabschnitt keinen Abschnitt einschließt, der zu dem Tankhauptkörper hin konkav ist.

15. Rollerartiges Fahrzeug nach einem der vorhergehenden Ansprüche, wobei der Abwärtsrahmen einen unteren Abwärtsrahmenabschnitt (120) einschließt, der einen unteren Endabschnitt des Abwärtsrahmens einschließt, wobei, wenn von der Vorderseite des rollerartigen Fahrzeugs aus betrachtet, der untere Abwärtsrahmenabschnitt an einer ersten seitlichen Seite in Bezug auf die Mittellinie des rollerartigen Fahrzeugs angeordnet ist, die sich in der vertikalen Richtung erstreckt,
wenn von der Vorderseite des rollerartigen Fahrzeugs aus betrachtet, das Kraftstoff-Zufuhrrohr an einer zweiten seitlichen Seite in Bezug auf die Mittellinie des rollerartigen Fahrzeugs angeordnet ist, die sich in der vertikalen Richtung erstreckt, und
wenn von der Vorderseite des rollerartigen Fahrzeugs aus betrachtet, die Mittellinie des rollerartigen Fahrzeugs, die sich in der vertikalen Richtung erstreckt, zwischen dem unteren Abwärtsrahmenabschnitt und dem Kraftstoff-Zufuhrrohr angeordnet ist.

## Revendications

1. Véhicule de type scooter (1), le véhicule de type scooter comprenant :
un tube de direction (11) ;
un cadre descendant (12 ; 100) s'étendant vers le bas à partir du tube de direction ;
un cadre inférieur (13) s'étendant vers l'arrière à partir du cadre descendant ;
un cadre de selle (14) s'étendant vers l'arrière et vers le haut à partir du cadre inférieur ;
une selle (5) fournie à l'arrière du tube de direction et supportée sur le cadre de selle ;
un appui-pied plat (34 ; 103) permettant de placer les pieds d'un pilote à la surface, l'appui-pied plat étant fourni en dessous et à l'avant de la selle, et au-dessus du cadre inférieur ;
un réservoir du carburant (8) fourni sous l'appui-pied plat ;
une conduite d'alimentation de carburant (40) faisant saillie vers le haut à partir du réservoir de carburant ; et
une roue avant (4) fournie à l'avant d'une partie extrémité inférieure (121) du cadre descendant, à l'avant de la conduite de carburant (43) et à l'avant du réservoir de carburant lorsqu'on regarde depuis un côté du véhicule de type scooter ;
dans lequel, lorsqu'on regarde depuis le côté du véhicule de type scooter, au moins une partie d'une partie extrémité inférieure de la conduite d'alimentation de carburant chevauche le cadre descendant,
lorsqu'on regarde une vue en plan du véhicule de type scooter, une ligne médiane (C1) du véhicule de type scooter s'étend dans la direction longitudinale du véhicule de type scooter à travers le tube de direction,
et,
l'appui-pied plat comprend :
une partie centrale (35) fournie derrière la partie extrémité inférieure du cadre descendant et la conduite d'alimentation de carburant ;
une partie repose-pied gauche (36) fournie à l'avant de la partie centrale, et du côté gauche de la conduite d'alimentation de carburant et de la partie extrémité inférieure du cadre descendant ; et
une partie repose-pied droit (37) fournie à l'avant de la partie centrale, et du côté droit de la conduite d'alimentation de carburant et de la partie extrémité inférieure du cadre descendant,
**caractérisé en ce que** le cadre descendant s'étend en direction d'un côté à partir du tube de direction de telle sorte que, lorsqu'on regarde une vue en plan du véhicule de type scooter, au moins une partie de la partie extrémité inférieure du cadre descendant est fournie sur le côté par rapport à la ligne médiane, et,
lorsqu'on regarde une vue en plan du véhicule de type scooter, au moins une partie de la conduite d'alimentation de carburant est fournie sur un autre côté ou un côté opposé de la ligne médiane par rapport au côté de la ligne médiane vers lequel s'étend le cadre descendant.

2. Véhicule de type scooter selon la revendication 1, dans lequel le côté est le côté gauche ou le côté droit et l'autre côté ou le côté opposé est l'autre parmi le côté droit ou le côté gauche, de sorte que le cadre descendant s'étend en direction d'un côté gauche à partir du tube de direction de sorte que, lorsqu'on regarde une vue en plan du véhicule de type scooter, au moins une partie de la partie extrémité inférieure du cadre descendant est fournie sur le côté gauche par rapport à la ligne médiane ; ou bien le cadre descendant s'étend en direction du côté droit à partir du tube de direction de sorte que, lorsqu'on regarde une vue en plan du véhicule de type scooter, au moins une partie de la partie extrémité inférieure du cadre descendant est fournie sur le côté droit par rapport à la ligne médiane ; et
si le cadre descendant s'étend vers le côté droit, alors, sur une vue en plan du véhicule de type scooter, au moins une partie de la conduite d'alimentation de carburant est fournie sur le côté gauche par rapport à la ligne médiane, ou, si le cadre descendant s'étend vers le côté gauche, alors, lorsqu'on regarde une vue en plan du véhicule de type scooter, au moins une partie de la conduite d'alimentation de carburant est fournie sur le côté droit par rapport à la ligne médiane.

3. Véhicule de type scooter selon l'une quelconque des revendications précédentes, dans lequel au moins une partie de la partie repose-pied gauche et au moins une partie de la partie repose-pied droit sont positionnées vers l'avant d'une extrémité arrière de la partie extrémité inférieure du cadre descendant et d'une extrémité arrière de la partie extrémité inférieure de la conduite d'alimentation de carburant.

4. Véhicule de type scooter selon l'une quelconque des revendications 1 à 3, dans lequel au moins une partie de la partie repose-pied gauche et au moins une partie de la partie repose-pied droit (72) sont positionnées à l'avant d'un bord avant de la partie extrémité inférieure de la conduite d'alimentation de carburant.

5. Véhicule de type scooter selon l'une quelconque des revendications précédentes, dans lequel la ligne médiane (C1; C2) du véhicule de type scooter, dans la direction transversale du véhicule de type scooter, est positionnée entre un bord intérieur, dans la direction transversale du véhicule de type scooter, de la partie extrémité inférieure du cadre descendant et un bord intérieur, dans la direction transversale du véhicule de type scooter, de la partie extrémité inférieure de la conduite d'alimentation de carburant.

6. Véhicule de type scooter selon l'une quelconque des revendications précédentes, dans lequel un diamètre du cadre descendant est supérieur à un diamètre de la conduite d'alimentation de carburant, et
dans un plan ou une surface horizontale qui comprend la partie extrémité inférieure de la conduite d'alimentation de carburant, une distance du bord intérieur, dans la direction transversale du véhicule de type scooter, du cadre descendant à la ligne médiane du véhicule de type scooter, dans la direction transversale du véhicule de type scooter, est inférieure à une distance du bord intérieur, dans la direction transversale du véhicule de type scooter, de la partie extrémité inférieure de la conduite d'alimentation de carburant à la ligne médiane du véhicule de type scooter dans la direction transversale du véhicule de type scooter.

7. Véhicule de type scooter selon l'une quelconque des revendications précédentes, dans lequel la conduite d'alimentation de carburant comprend une conduite de raccordement (52) faisant saillie vers le haut à partir du corps principal de réservoir (51),
dans lequel, lorsqu'on regarde depuis le côté du véhicule de type scooter, un centre dans la direction longitudinal du véhicule de type scooter d'une extrémité supérieure de la conduite de raccordement chevauche le cadre descendant ; et
le long d'une ligne imaginaire s'étendant dans la direction transversale du véhicule de type scooter et passant par le centre dans la direction longitudinale du véhicule de type scooter de l'extrémité supérieure de la conduite de raccordement lorsqu'on regarde une vue en plan du véhicule de type scooter :
une dimension, dans la direction transversale du véhicule de type scooter, de la partie repose-pied gauche est inférieure à une dimension, dans la direction transversale du véhicule de type scooter, de la partie centrale,
une dimension, dans la direction transversale du véhicule de type scooter, de la partie repose-pied droit est inférieure à la dimension, dans la direction transversale du véhicule de type scooter, de la partie centrale, et
la somme de la dimension, dans la direction transversale du véhicule de type scooter, de la partie repose-pied gauche et de la dimension, dans la direction transversale du véhicule de type scooter, de la partie repose-pied droit est inférieure à la dimension, dans la direction transversale du véhicule de type scooter, de la partie centrale.

8. Véhicule de type scooter selon l'une quelconque des revendications précédentes, dans lequel une distance entre le cadre descendant et la conduite d'alimentation de carburant dans la direction transversale du véhicule de type scooter est inférieure à une largeur du cadre descendant dans la direction transversale du véhicule de type scooter.

9. Véhicule de type scooter selon l'une quelconque des revendications précédentes, dans lequel, lorsqu'on regarde depuis le côté du véhicule de type scooter, une partie avant ou la plus avant du réservoir de carburant chevauche une partie inférieure du cadre descendant, et
lorsqu'on regarde une vue en plan du véhicule de type scooter, la partie avant ou la plus avant du réservoir de carburant est fournie entre la partie inférieure du cadre descendant et une parmi la partie repose-pied gauche et la partie repose-pied droit.

10. Véhicule de type scooter selon l'une quelconque des revendications précédentes, dans lequel le cadre inférieur comprend :
une première partie cadre inférieur (13a) raccordée à la partie extrémité inférieure du cadre descendant, la première partie cadre inférieur étant fournie sur un même côté, par rapport à la ligne médiane du véhicule de type scooter, que la direction dans laquelle le cadre descendant s'étend lorsqu'on regarde une vue en plan du véhicule de type scooter ; et
une deuxième partie cadre inférieur (13b) raccordée à la partie extrémité inférieure du cadre descendant, la deuxième partie cadre inférieur étant fournie sur un côté opposé, par rapport à la ligne médiane du véhicule de type scooter, à la direction dans laquelle s'étend le cadre descendant lorsqu'on regarde une vue en plan du véhicule de type scooter ;
dans lequel, lorsqu'on regarde une vue en plan du véhicule de type scooter, au moins une partie du réservoir de carburant est fournie entre la première partie cadre inférieur et la deuxième partie cadre inférieur,
lorsqu'on regarde une vue en plan du véhicule de type scooter, la deuxième partie cadre inférieur s'étend de manière à croiser la ligne médiane du véhicule de type scooter à partir du côté où la partie extrémité inférieure du cadre descendant est fournie,
lorsqu'on regarde une vue en plan du véhicule de type scooter, une parmi la partie repose-pied gauche et la partie repose-pied droit chevauche une partie de la deuxième partie cadre inférieur, et
lorsqu'on regarde une vue en plan du véhicule de type scooter, une distance de la ligne médiane du véhicule de type scooter à un bord extérieur de la deuxième partie cadre inférieur est supérieure à une distance de la ligne médiane du véhicule de type scooter à un bord extérieur de la première partie cadre inférieur.

11. Véhicule de type scooter selon la revendication 10, dans lequel une partie avant ou la plus avant du réservoir de carburant est fournie au-dessus de la deuxième partie cadre inférieur,
lorsqu'on regarde une vue en plan du véhicule de type scooter, la partie avant ou la plus avant du réservoir de carburant chevauche la deuxième partie cadre inférieur, et
lorsqu'on regarde une vue en plan du véhicule de type scooter, une parmi la partie repose-pied gauche et la partie repose-pied droit est fournie sur un côté latéral extérieur d'une partie où la partie avant du réservoir de carburant et la deuxième partie cadre inférieur se chevauchent.

12. Véhicule de type scooter selon la revendication 10 ou 11, dans lequel au moins une partie d'une partie raccordement (124) entre la conduite d'alimentation de carburant et le réservoir de carburant est fournie au-dessus de la deuxième partie cadre inférieur, et, sur une vue en plan du véhicule de type scooter, chevauche la deuxième partie cadre inférieur, et
lorsqu'on regarde une vue en plan de véhicule de type scooter, une parmi la partie repose-pied gauche et la partie repose-pied droit est fournie sur le côté latéral extérieur d'une partie où la deuxième partie cadre inférieur et au moins une partie de la partie raccordement entre la conduite d'alimentation de carburant et le réservoir de carburant se chevauchent.

13. Véhicule de type scooter selon l'une quelconque des revendications 10 à 12, dans lequel le réservoir de carburant comprend :
un corps principal de réservoir ; et
une partie bride faisant saillie à partir du corps principal de réservoir dans une direction horizontale ;
au moins une partie de la partie bride étant fournie au-dessus de la deuxième partie cadre inférieur, et chevauche la deuxième partie cadre inférieur lorsqu'on regarde une vue en plan du véhicule de type scooter, et
lorsqu'on regarde une vue en plan du véhicule de type scooter, une parmi la partie repose-pied gauche et la partie repose-pied droit est fournie sur le côté latéral extérieur d'une partie où la partie bride et la deuxième partie cadre inférieur sont chevauchées.

14. Véhicule de type scooter selon la revendication 13, dans lequel la conduite d'alimentation de carburant comprend une conduite de raccordement faisant saillie vers le haut à partir du corps principal de réservoir, et
lorsqu'on regarde une vue en plan du véhicule de type scooter, la conduite de raccordement ne chevauche pas la partie bride ; et éventuellement :
lorsqu'on regarde une vue en plan du véhicule de type scooter, la partie bride entoure une périphérie du corps principal de réservoir ; et
une limite entre le corps principal de réservoir et la partie bride ne comprend aucune partie qui est concave en direction du corps principal de réservoir.

15. Véhicule de type scooter selon l'une quelconque des revendications précédentes, dans lequel le cadre descendant comprend une partie cadre descendant inférieur (120) comprenant une partie extrémité inférieure du cadre descendant, la partie cadre descendant inférieur étant fournie au niveau d'un premier côté latéral par rapport à la ligne médiane du véhicule de type scooter qui s'étend dans la direction verticale lorsqu'on regarde depuis l'avant du véhicule de type scooter,
lorsqu'on regarde depuis l'avant du véhicule de type scooter, la conduite d'alimentation de carburant est fournie au niveau d'un deuxième côté latéral par rapport à la ligne médiane du véhicule de type scooter qui s'étend dans la direction verticale ; et
lorsqu'on regarde depuis l'avant du véhicule de type scooter, la ligne médiane du véhicule de type scooter qui s'étend dans la direction verticale est positionnée entre la partie cadre descendant inférieur et la conduite d'alimentation de carburant.
